# EUROPEAN PATENT SPECIFICATION

(11) **EP 3 673 353 B1**
(45) Date of publication and mention of the grant of the patent: **01.04.2026**
(21) Application number: 18874054.2
(22) Date of filing: 01.11.2018
(51) Int. Cl.: G06F 1/16, G06F 3/0481, G06F 3/0484, G06F 3/04845, G06F 3/04847, G06F 3/01, G06T 19/00, G06F 3/03

(54) **METHOD AND DEVICE FOR PERFORMING REMOTE CONTROL**
VERFAHREN UND VORRICHTUNG ZUR DURCHFÜHRUNG EINER FERNSTEUERUNG
PROCÉDÉ ET DISPOSITIF DE RÉALISATION DE COMMANDE À DISTANCE

(30) Priority: 02.11.2017 IN 201711039162
(43) Date of publication of application: 01.07.2020
(73) Proprietor: Samsung Electronics Co., Ltd., Suwon-si, Gyeonggi-do 16677 (KR)
(72) Inventor: SAURABH, Shashank, Noida 201303 (IN); SHOREY, Mayank, Noida 201303 (IN); SRIVASTAVA, Puneet, Noida 201303 (IN); SHARMA, Sushant, Noida 201303 (IN)
(74) Representative: Nederlandsch Octrooibureau
(86) International application number: PCT/KR2018/013187
(87) International publication number: WO 2019/088737

(56) References cited:
- EP-A2- 1 271 293
- WO-A1-2014/130329
- CN-A- 102 047 199
- KR-A- 20160 128 119
- US-A1- 2016 133 052
- US-A1- 2016 259 423
- US-A1- 2016 274 762
- US-A1- 2017 038 830
- US-A1- 2017 061 694
- US-B1- 8 427 396

## Description

### [Technical Field]

The present disclosure relates to a method and device for performing remote control.

### [Background Art]

Generally, virtual reality (VR) refers to an environment or circumstances similar to a real-life environment as created by computer graphics and means an interface allowing a human being to feel it through his sense organs as he interacts with it. The user may interoperate with virtual reality in real-time through device manipulation and may have a similar sensory experience to that in the real world.

Augmented reality (AR) refers to an enhanced version of reality and is a computer graphic scheme that allows a virtual object to look present in the original environment by synthesizing the virtual object or information with the actual environment. The AR is thus a combination of a real scene or object as viewed by a user and a virtual scene or virtual object created by computer graphics that augments the real scene with additional information.

Today, a smart glass may be classified into a device based on AR capable of providing instant information, such as Google Glass ^{®}, and a device based on VR capable of using immersive virtual reality content, such as Oculus ^{®}. These devices are classified as a see-through type for providing the AR and as a see-closed type for providing the VR. Sometimes, because these devices may be worn on a body, they are generally referred to as wearable devices. For example, wearable devices are being provided in various types, e.g., head mounted type, glasses, watches, bands, contact lenses, rings, shoes, clothes, or other various ways to be worn on the human body or clothes.

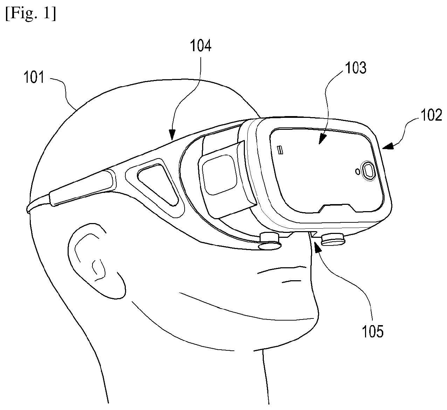

Among various wearable devices, head mounted wearable devices, e.g., head mounted displays (HMD), are being intensively developed. An HMD may provide images in a see-through type providing AR and in a see-closed type providing VR. In one implementation as shown in FIG. 1, a user 101 may wear a VR device 102 to enjoy a VR experience, wherein the VR device comprises a mobile device 103 mounted in a secure manner in a mounting unit 105 provided in an HMD 104, wherein the mobile device 103 faces lenses (not shown in FIG. 1) of the HMD 104.

One of the notable parameters to be addressed in AR systems and VR systems is, the placement of virtual contents in the respective environment being viewed on a VR device. Since VR systems are entirely computer generated, they are intrinsically self-orienting, i.e., the placement of every virtual object in a VR environment can be defined in computer code with respect to another virtual object. In contrast, an AR system must place the virtual objects in proper registration both to other virtual objects generated by the system and to real world objects. Registration of the virtual objects and the real objects in an AR environment is the subject of much on-going research.

Internet of Things (IoT) refers to the interconnection of uniquely identifiable devices, also referred to as 'connected devices', using a network. The connected devices, popularly referred to as IoT devices or as smart devices, are embedded with electronics, software, sensors, actuators, and network connectivity that enable these devices to collect data, exchange data and be controlled over the network. Such devices include, but not limited to, sensors, smart automation devices, wearable devices, and smart phone.

US 20120249741A1 proposes placing a virtual object or interface on a selected physical surface so that a single user or multiple users can collaborate to, view and interact with the virtual object on the physical surface. In this case, a virtual image is anchored to real world surfaces and gestures are used to control it. However, the present solution does not provide controlling the virtually rendered objects so as to affect the functionality of the real objects. Further, the present solution does not provide realistic experience of interacting and controlling the real objects.

Further, US20140292645A1 discloses a display control device that is configured to place a virtual object in augmented reality space and further change the state or position of the virtual object in the AR space after the placement of the virtual object. Towards this, the display control device employs a display controller configured to place a virtual object within an augmented reality space corresponding to a real space in accordance with a recognition result of a real object shown in an image captured by an imaging part, and an operation acquisition part configured to acquire a user operation. When the user operation is a first operation, the display controller causes the virtual object to move within the augmented reality space. In one example, an embodiment of this application can be applied to a scene in which a virtual object which appears in a game application is moved within the AR space and the size of the virtual object is adjusted. However, the solution of this application does not mention interaction with the virtual objects so as to control the real object.

US20080266323A1 discloses an augmented reality user interaction system that includes a wearable computer equipped with at least one camera to detect one or more fiducial markers worn by a user, extract a position and orientation of the fiducial marker in an image, and superimposes on the image a visual representation of a user, thus allowing interaction with a virtual user interface on the position of the fiduicial markers, for example, on the hand of the user. US 8225226B2 also discloses a virtual control panel and use of a pointing object to interact with the virtual control panel, wherein the virtual control panel is an augmented reality view of a real control panel. However, the solution as provided in these two documents are limited to virtual user-interfaces and do not extend to the realistic experience of interaction with the real objects itself.

In view of the above, it is desired to provide solutions to enable interactions and controlling of real-world IoT objects or connected objects that provide a user-interaction experience, similar to the feel of interaction with the real devices. At the same time, there also exists a need for a solution to remotely control, manage and track the IoT devices, for example, smart home appliances in a home environment.

US 2016/0274762 discloses an augmented reality (AR) device can access a library of applications or user interfaces (UIs) designed to control a set of devices. The AR device can determine Which U1 to present based on detection of a device to be controlled near the AR device. For example, a user wearing an AR device may look at a thermostat placed on a Wall and a U1 to control the thermostat may be presented to the user. The determination that the user is looking at the thermostat may be made by correlating the gaze tracking information of the user-facing camera with the location of the thermostat in an image captured by a World-facing camera. Determination of the location of the thermostat in the image can be performed using image recognition technology. The U1 can be selected based on a database record pairing the U1 with the thermostat. to device interaction in an augmented reality.

### [Disclosure]

### [Technical Problem]

Presently, a user can remotely control the IoT devices in a home environment using a mobile device. The mobile device can be also utilized to connect to a VR device for the purpose of enabling the user to interact with such IoT devices. In order to interact with the IoT devices, the user provides his inputs usually on a menu-based interface which may include a plurality of items related to the connected IoT devices and a plurality of sub-items related to various controls for the connected IoT devices. The process of selection of the desired IoT device and the desired control for the IoT device through such menu-based interface is manual, tedious, and time consuming. Also, the menu based interface may not provide any real-time information of the IoT devices. In some cases, the user-inputs on the menu-based interface may be performed by way of gestures where the gestures can be sensed by the VR device. However, the existing VR solutions are limited in terms of the user-interaction with the IoT devices. Further, these solutions do not provide a realistic experience of controlling the IoT devices.

### [Technical Solution]

This summary is provided to introduce a selection of concepts in a simplified format that are further described in the detailed description of the present disclosure. This summary is not intended to identify key or essential inventive concepts of the claimed subject matter, nor is it intended for determining the scope of the claimed subject matter.

The present disclosure relates to a method and device for performing remote control. Specifically, the present disclosure relates to Internet of Things (IoT) devices, augmented reality (AR) and virtual reality (VR). More particularly, the present disclosure provides methods and apparatus for controlling the IoT devices via AR or VR.

The invention is defined by the appended claims.

These aspects and advantages will be more clearly understood from the following detailed description taken in conjunction with the accompanying drawings and claims.

### [Description of Drawings]

To further clarify advantages and aspects of the present disclosure, a more particular description of the present disclosure will be rendered by reference to specific embodiments thereof, which is illustrated in the appended drawings. It is appreciated that these drawings depict only typical embodiments of the present disclosure. The present disclosure will be described and explained with additional specificity and detail with the accompanying drawings, which are listed below for quick reference.
FIG. 1 illustrate an example VR device, as known in the prior art.
FIGS. 2A and 2B are conceptual views illustrating a network environment that includes an electronic device to which a method for controlling of connected devices via augmented reality (AR), or virtual reality (VR) encompassed by the wording of the claims is applicable.
FIG. 3 illustrates a block diagram of an electronic device suitable for controlling or connected devices via AR, VR.
FIGS. 4A and 4B are conceptual views illustrating a VR device suitable for controlling of connected devices.
FIGS. 5A and 5B are conceptual views illustrating an AR device suitable for controlling of connected devices.
FIGS. 6A, 6B and 6C illustrate an exemplary method of providing control command to at least one connected device, not encompassed by the wording of the claims.
FIGS. 7A and 7B illustrate an exemplary method of providing control command to at least one connected device, not encompassed by the wording of the claims.
FIGS. 8A and 8B illustrate an example of displaying multimedia contents corresponding to connected device in a VR, not encompassed by the wording of the claims.
FIGS. 9A, 9B, 9C, and 9D illustrate an example of detecting a placement command for placing a multimedia content in an AR, not encompassed by the wording of the claims.
FIGS. 10A, 10B and 10C illustrate an example of displaying an updated multimedia content including a graphical representation of the actuating means in an operational relationship with a graphical representation of an actuator corresponding to a connected device, not encompassed by the wording of the claims.
FIGS. 11A and 11B illustrate an example of providing gesture command in relation to an actuator, in a VR, not encompassed by the wording of the claims.
FIG. 12 illustrates another example of providing gesture command in relation to an actuator, in a VR, not encompassed by the wording of the claims.
FIG. 13 illustrates another example of providing gesture command in relation to an actuator, in an AR, not encompassed by the wording of the claims.
FIGS. 14A and 14B illustrate another example of providing gesture command in relation to an actuator, in a VR, in accordance with an embodiment of the present disclosure.
FIGS. 15A and 15B illustrate an example of displaying, via VR device, an updated multimedia content including a graphical representation of an actuating means in an operational relationship with graphical representation of an actuator, not encompassed by the wording of the claims.
FIGS. 16A and 16B illustrate an example of providing gesture commands in relation to an actuator, via an AR device, not encompassed by the wording of the claims.
FIGS. 17A and 17B illustrate an example of a VR including multimedia contents corresponding to connected devices, and a graphical representation of an actuating means to provide a re-allocation gesture in relation to a selected multimedia content, not encompassed by the wording of the claims.
FIGS. 18A and 18B illustrate an example of displaying an updated multimedia content including a graphical representation of the actuator of a corresponding connected device, and further displaying a list of available graphical representations of the actuators, not encompassed by the wording of the claims.
FIGS. 19A and 19B illustrate an example of controlling connected devices having substantially similar virtual replica, not encompassed by the wording of the claims.
FIG. 20 illustrates an example of performing remote control in a first device supporting at least one of a VR mode and an AR mode, not encompassed by the wording of the claims.

It may be noted that to the extent possible, like reference numerals have been used to represent like elements in the drawings. Further, those of ordinary skill in the art will appreciate that elements in the drawings are illustrated for simplicity and may not have been necessarily drawn to scale. For example, the dimensions of some of the elements in the drawings may be exaggerated relative to other elements to help to improve understanding of aspects of the present disclosure. Furthermore, the one or more elements may have been represented in the drawings by conventional symbols, and the drawings may show only those specific details that are pertinent to understanding the embodiments of the present disclosure so as not to obscure the drawings with details that will be readily apparent to those of ordinary skill in the art having benefit of the description herein.

### [Mode for Invention]

It should be understood at the outset that although illustrative implementations of the embodiments of the present disclosure are illustrated below, the present disclosure may be implemented using any number of techniques, whether currently known or in existence. The present disclosure should in no way be limited to the illustrative implementations, drawings, and techniques illustrated below, including the exemplary design and implementation illustrated and described herein, but may be modified within the scope of the appended claims.

The term "some" as used herein is defined as "none, or one, or more than one, or all." Accordingly, the terms "none," "one," "more than one," "more than one, but not all" or "all" would all fall under the definition of "some." The term "some embodiments" may refer to no embodiments or to one embodiment or to several embodiments or to all embodiments. Accordingly, the term "some embodiments" is defined as meaning "no embodiment, or one embodiment, or more than one embodiment, or all embodiments."

The terminology and structure employed herein is for describing, teaching and illuminating some embodiments and their specific features and elements and does not limit, restrict or reduce the scope of the claims.

More specifically, any terms used herein such as but not limited to "includes," "comprises," "has," "consists," and grammatical variants thereof do NOT specify an exact limitation or restriction and certainly do NOT exclude the possible addition of one or more features or elements, unless otherwise stated, and furthermore must NOT be taken to exclude the possible removal of one or more of the listed features and elements, unless otherwise stated with the limiting language "MUST comprise" or "NEEDS TO include."

Whether or not a certain feature or element was limited to being used only once, either way it may still be referred to as "one or more features" or "one or more elements" or "at least one feature" or "at least one element." Furthermore, the use of the terms "one or more" or "at least one" feature or element do NOT preclude there being none of that feature or element, unless otherwise specified by limiting language such as "there NEEDS to be one or more... " or "one or more element is REQUIRED."

Unless otherwise defined, all terms, and especially any technical and/or scientific terms, used herein may be taken to have the same meaning as commonly understood by one having an ordinary skill in the art.

Reference is made herein to some "embodiments." It should be understood that an embodiment is an example of a possible implementation of any features and/or elements presented in the attached claims. Some embodiments have been described for the purpose of illuminating one or more of the potential ways in which the specific features and/or elements of the attached claims fulfil the requirements of uniqueness, utility and non-obviousness.

Use of the phrases and/or terms such as but not limited to "a first embodiment," "a further embodiment," "an alternate embodiment," "one embodiment," "an embodiment," "multiple embodiments," "some embodiments," "other embodiments," "further embodiment", "furthermore embodiment", "additional embodiment" or variants thereof do NOT necessarily refer to the same embodiments. Unless otherwise specified, one or more particular features and/or elements described in connection with one or more embodiments may be found in one embodiment, or may be found in more than one embodiment, or may be found in all embodiments, or may be found in no embodiments. Although one or more features and/or elements may be described herein in the context of only a single embodiment, or alternatively in the context of more than one embodiment, or further alternatively in the context of all embodiments, the features and/or elements may instead be provided separately or in any appropriate combination or not at all. Conversely, any features and/or elements described in the context of separate embodiments may alternatively be realized as existing together in the context of a single embodiment.

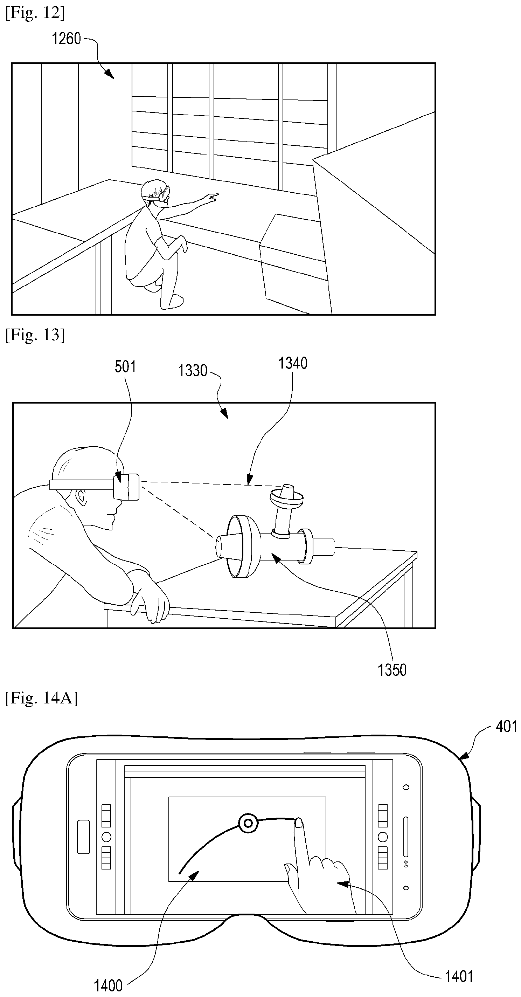

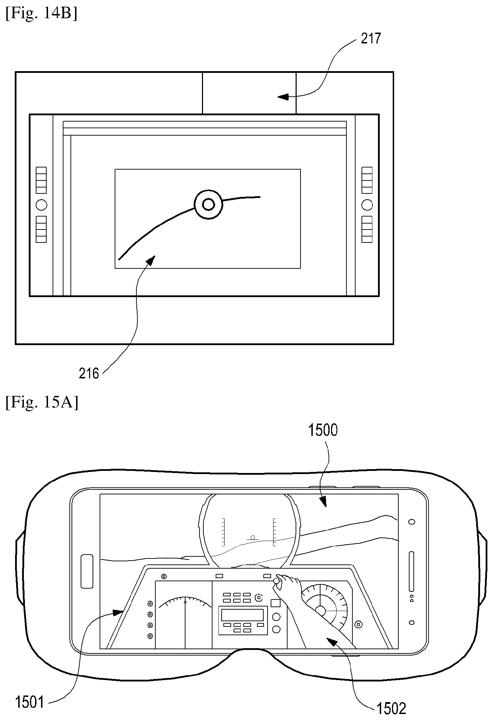

Any particular and all details set forth herein are used in the context of some embodiments and therefore should NOT be necessarily taken as limiting factors to the attached claims. The attached claims can be realized in the context of embodiments other than the ones used as illustrative examples in the description below. The present description provides several examples that enable a better understanding of the claimed invention. The invention encompassed by the wording of the claims is related to FIG. 14A and FIG. 14B and corresponding paragraph [263]. The remaining of the description is not encompassed by the wording of the claims.

In accordance with various embodiments of the present disclosure, an electronic device is provided to which a method of providing control command to connected devices via an AR or a VR, is applicable. According to one aspect of the present disclosure, the electronic device may be an AR device. According to another aspect of the present disclosure, the electronic device may be a VR device. Further, the respective VR device may be a standalone VR device, or may be an electronic device enabled to operate in a respective VR mode, through a connection to another electronic device, for example a head mounted device (HMD), as shown in FIG. 1. Similarly, the respective AR device may be a standalone AR device, or may be an electronic device enabled to operate in a respective AR mode, through a connection to another electronic device.

In one example, the electronic device according to various embodiments of the present disclosure may include at least one of a smartphone, a tablet personal computer (PC), a mobile phone, a video phone, an electronic book (e-book) reader, a desktop PC, a laptop PC, a netbook computer, a personal digital assistant (PDA), a mobile medical appliance, a camera, and a wearable device (e.g., an HMD such as electronic glasses, electronic clothes, an electronic bracelet, an electronic necklace, an electronic appcessory, electronic tattoos or a smart watch). However, these examples should not be construed as limiting to the present disclosure and may include other devices and appliances enabled with communication interfaces to implement the method of providing control command to the connected devices, as disclosed in the present disclosure.

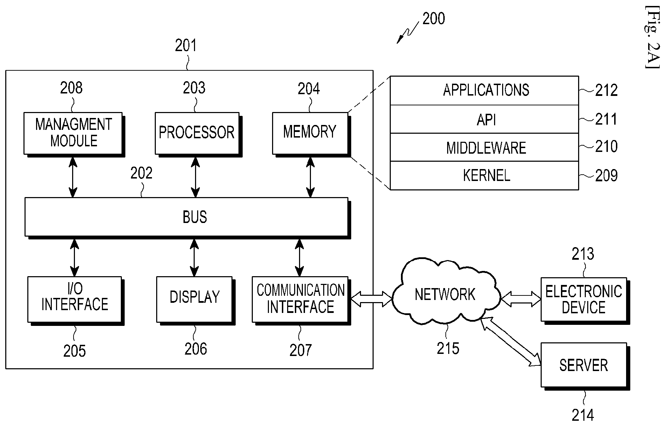

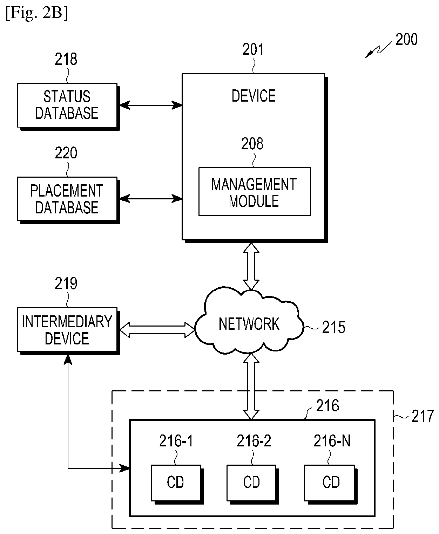

FIGS. 2A and 2B are conceptual views illustrating a network environment 200 that includes an electronic device in accordance with various embodiments of the present disclosure, or that includes an electronic device to which a method of providing control command to connected devices via an AR or VR is applicable. Referring to FIG. 2A, an electronic device 201 may include at least one of a bus 202, a processor 203, a memory 204, an input/output (I/O) interface 205, a display 206, and a communication interface (a transceiver) 207, and a management module 208.

The bus 202 may include a circuit that connects the foregoing components and allows communication (for example, control messages) between the foregoing components.

The processor 203 may, for example, receive instructions from other components (for example, the memory 204, the I/O interface 205, the display 206, or the communication interface 207), interpret the received instructions, and execute computation or data processing according to the interpreted instructions. The processor 203 may control one or more other components of the electronic device 201 and/or processes an operation or data related to communication. The processor 203 may include one or more of a central processing unit (CPU), an application processor (AP), and a communication processor (CP).

The memory 204 may, for example, store instructions or data that are received from, or generated by, other components (for example, the I/O interface 205, the display 206, the communication interface 207, or the management module 208). For example, the memory 204 may include programming modules such as a kernel 209, a middleware 210, an application programming interface (API) 211, or an application 212. Each of the foregoing programming modules may include software, firmware, hardware, or a combination of at least two of software, firmware, and hardware.

The kernel 209 may control or manage system resources (for example, the bus 202, the processor 203, or the memory 204) that are used in executing operations or functions implemented in other programming modules such as the middleware 210, the API 211, or the application 212. In addition, the kernel 209 may provide an interface for allowing the middleware 210, the API 211, or the application 212 to access and control or manage individual components of the electronic device 201.

The middleware 210 may be a medium through which the kernel 209 may communicate with the API 211 or the application 212 to transmit and receive data. In addition, the middleware 210 may perform control operations (for example, scheduling or load balancing) in regard to work requests by one or more applications 212 by, for example, assigning priorities for using system resources (the bus 202, the processor 203, or the memory 204) of the electronic device 201 to the one or more applications 212.

The API 211 is an interface that may control functions that the application 212 provides at the kernel 209 or the middleware 210. For example, the API 211 may include at least one interface or function (for example, a command) for file control, window control, video processing, or text control.

According to various embodiments, the application 212 may include a short message service (SMS)/media messaging service (MMS) application, an email application, a calendar application, an alarm application, a health care application (for example, an application that measures the amount of exercise or a blood sugar level), or an environment information application (for example, an application that provides information about air pressure, humidity, or temperature). Alternatively or additionally, the application 212 may be related to information exchange between the electronic device 201 and an external electronic device (for example, an electronic device 213). The information exchange-related application may be, for example, a notification relay application for transmitting specific information to the external electronic device or a device management application for managing the external electronic device.

For example, the notification relay application may include a function of transmitting notification information generated from another application (for example, an SMS/MMS application, an email application, a health care application, or an environment information application) to the external electronic device (for example, the electronic device 213). Alternatively or additionally, the notification relay application may receive notification information from the external electronic device (for example, the electronic device 213) and transmit the received notification information to a user. The device management application may manage (for example, install, delete, or update) at least a part of functions of the external electronic device (for example, the electronic device 213) communicating with the electronic device 201 (for example, turn-on turn-off of the external electronic device (or a part of its components) or control of the brightness (or resolution) of the display), an application executed in the external electronic device, or a service (for example, a call service or a message service) provided by the external electronic device.

According to various embodiments, the application 212 may include an application designated according to a property (for example, the type of the electronic device) of the external electronic device (for example, the electronic device 213). For example, if the external electronic device is a digital audio player, the application 212 may include an application related to music play. If the external electronic device is a mobile medical device, the application 212 may include an application related to health care. According to an embodiment, the application 212 may include at least one of an application designated in the electronic device 201 or an application received from another electronic device (for example, a server 214 or the electronic device 213). The server 214 can be single server or may include a group of one or more servers.

Further, the application 212 may at least include one of an application specified to the electronic device 201 and an application received from an external device (e.g., the server 214 or the electronic device 213).

In accordance with an embodiment of the present disclosure, the application 212 may include an application which enables the electronic device 201 to function in an AR mode. In accordance with another embodiment of the present disclosure, the application 212 may include an application which enables the electronic device 201 to function in a VR mode. In accordance with yet another embodiment of the present disclosure, the application 212 may include an application which enables the electronic device 201 to select an option of functioning in an AR mode, or select another option of functioning in a VR mode.

The I/O interface 205 may receive a command or data from a user through an I/O device (for example, a sensor, a keyboard, or a touch screen) and provide the command as received, to the processor 203, the memory 204, the communication interface 207, or the management module 208, for example, through the bus 202. For example, the I/O interface 205 may provide data of a user touch received through the touch screen to the processor 203. By way of another example, the I/O interface 205 may receive, for example a command and/or data from a user, and transfer the received command and/or data to the processor 203 and/or the memory 204 through the bus 202. In one such example, the I/O interface 205 may receive gesture position information and gesture command information via an actuating means (i.e., indicator), when the electronic device 201 functions in a respective AR mode or a respective VR mode. The gesture position information and the gesture command information as received is transferred to the processor 203 for further processing according to the teachings of the present disclosure. The actuating means and the corresponding gesture position information and the gesture command information shall be explained in detail in the foregoing description.

Further, the I/O interface 205 may, for example, output a command or data received from the processor 203, the memory 204, the communication interface 207, or the management module 208 through the bus 202 to the I/O device (for example, a speaker or a display). For example, the I/O interface 205 may output voice data processed by the processor 203 to a user through the speaker. By way of another example, when the electronic device 201 functions in an AR mode or a VR mode, the I/O interface 205 may output a control command to be executed on a connected device, on applying the teachings of the present disclosure as explained in detail in the foregoing description.

The display 206 may display a multimedia content including an image, a video and/or data to a user. The display 206 may be configured to include, but not limited to, a liquid crystal display (LCD), a light emitting diode (LED) display, an organic LED (OLED) display, a plasma cell display, an electronic ink array display, an electronic paper display, a flexible LCD, a flexible electro-chromic display, and a flexible electro wetting display.

The communication interface 207 may provide communication between the electronic device 201 and an external device (for example, the electronic device 213 or the server 214). For example, the communication interface 207 may be connected to a network 215 by wireless or wired communication and communicate with the external device over the network 215. The wireless communication may be conducted in conformance to, for example, at least one of wireless fidelity (Wi-Fi), Bluetooth (BT), near field communication (NFC), GPS, and cellular communication (for example, long term evolution (LTE), LTE-Advanced (LTE-A), code division multiple access (CDMA), Wideband CDMA (WCDMA), universal mobile telecommunication system (UMTS), wireless broadband (WiBro), or global system for mobile communications (GSM)). The wired communication may be conducted in conformance to, for example, at least one of universal serial bus (USB), high definition multimedia interface (HDMI), recommended standard 232 (RS-232), or plain old telephone service (POTS).

In accordance with various embodiments of the present disclosure, the electronic device 201 may be connected to an external device (e.g., an electronic device 213 or a server 214) through a network 215. According to an embodiment of the present disclosure, the electronic device 201 may be connected to the external electronic device 213 or 214 not through a network 215. Further, according to various embodiments of the present disclosure, the external electronic device, i.e. the electronic device 213 and the server 214, may perform some or all of the operations performed by the electronic device 201. In one example, when the electronic device 201 performs some functions or services automatically or by request, the electronic device 201 may request the external electronic device, i.e., the electronic device 213 or the server 214 to perform at least some of the functions related to the functions or services, in addition to or instead of performing the functions or services by itself. In this case, external electronic device, i.e., the electronic device 213 or the server 214, may carry out the requested function or the additional function, and transfers the result to the electronic device 201. The electronic device 201 may provide the requested functions or services based on the received result as it is or after additionally processing the received result. To this end, for example, cloud computing, distributed computing, or client-server computing technology may be used.

In one embodiment, the external electronic device, e.g., the electronic device 213 or the server 214 provides an AR, also referred to as "AR view" and "AR environment" in the present disclosure, when the electronic device 201 is connected to the external electronic device 213 or 214 through the network 215. In another embodiment, the external electronic device, e.g., the electronic device 213 or the server 214 provides a VR, also referred to "VR view" and "VR environment" in the present disclosure, when the electronic device 201 is connected to the external electronic device 213 or 214 through the network 215. In some embodiments, the external electronic device may be a wearable device such as head mounted display (HMD), to which the electronic device 201 is detachably mounted. When the electronic device 201 detects connection to the electronic device 213, the electronic device 201 may operate in a respective AR mode, or in a respective VR mode. When connected, the electronic device 201 may communicate with the external electronic device 213 through the communication interface 207. The electronic device 201 may be also directly connected to the electronic device 213 to communicate with the electronic device 213 without involving a separate network.

According to an embodiment, the network 215 may be a communication network, for example, at least one of a computer network, the Internet, an Internet of things (IoT), and a telephone network. According to an embodiment, at least one of the application 212, the API 211, the middleware 210, the kernel 209, or the communication interface 207 may support a protocol (for example, a transport layer protocol, a data link layer protocol, or a physical layer protocol) for communication between the electronic device 201 and the external device 213.

In accordance with an embodiment of the present disclosure, the electronic device 201 may function as a standalone AR device or a standalone VR device, without connection to an external electronic device, for example the external electronic device 213.

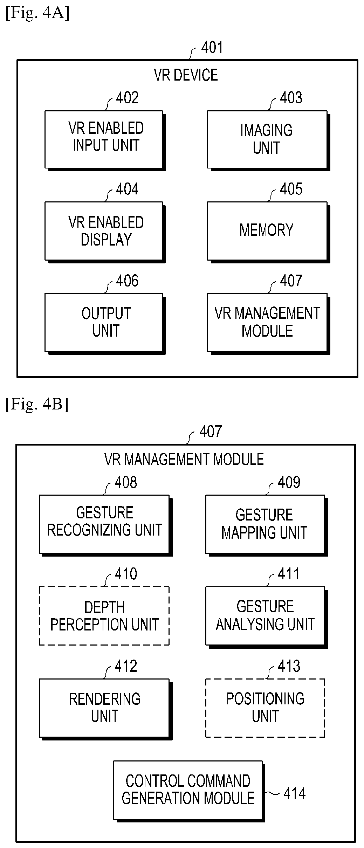

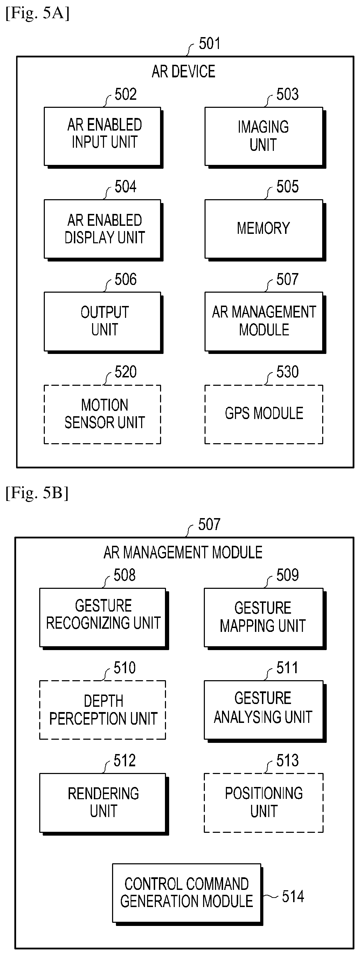

In accordance with an embodiment, a management module 208 may be present on the electronic device 201 to perform the method of providing control commands to the connected devices when the electronic device 201 functions in a respective AR mode, or a respective VR mode, in accordance with the teachings of the present disclosure. The management module 208 may include the processor 203 and the memory 204 for storing information required by the processor 203. The various embodiments of the management module 208 shall be explained in detail with reference to FIG. 4B and FIG. 5B, later in the detailed description.

Referring to FIG. 2B, an electronic device 201 is shown in a network environment 200 where the electronic device 201 is communicatively coupled to one or more connected devices (CD) 216-1, 216-2, ... 216-N (hereinafter referred to connected device 216 for denoting a single connected device and connected devices 216 for denoting plurality of connected devices) operating in a real world environment 217 (represented by dashed square). The connected devices 216 typically are embedded with electronics, software, sensors, actuators, and network connectivity that enable these connected devices 216 to perform designated tasks and to collect and exchange data over the network 215.

Such connected devices 216 include, but not limited to, sensors, smart devices, wearable devices, smart phones, computers including various types of software, industrial equipment and machinery, etc. Examples of the sensors include, but not limited to, proximity sensors and infrared sensors. Examples of the smart devices include, but not limited to, home automation devices such as smart television (TV), smart music system, smart speakers, smart sprinklers, smart vacuum cleaner, smart oven, and smart lighting system. Examples of the wearable devices include, but not limited to, smart watches, GPS trackers, and headphones. Example of industrial equipment and machinery include industrial tools, heavy machines, parts of heavy machines, etc. Example of computers-based software may include simulation and training tools. Examples of the real world environment 217 include, but not limited to, home, various rooms in home, vehicle, office, theatre, museum, factories, training site, simulated environment, etc.

Further, each of the connected devices 216 can be communicatively connected with other connected devices 216 in the real world environment 217. For example, a smart door can be further communicatively connected with a smart lock, a smart key set, a corridor light, and a smart phone. In addition, a master connected device (not shown in FIG. 2B) can be communicatively connected with rest of the connected devices 216. The master connected device controls the rest of the connected devices 216. In one implementation, the master connected device can itself be the connected device 216. In the above example, the smart phone can be master connected device for the smart door, the smart lock, the smart key set, and the corridor light. In another implementation, the master connected device can be different device. Further, in one implementation, the master connected device and the associated connected devices 216 may have similar appearances in the AR, or in the VR. For example, example, a ceiling light can be a master connected device for one or more ceiling lights. In another implementation, the master connected device and the associated connected devices 216 may not have similar appearances in the AR, or in the VR.

The connected device 216 present in the real world environment 217 may comprise of at least one actuator (not shown in FIG. 2B), to receive user-inputs and translate the received user-inputs to related control commands to operate the respective connected devices 216. In one implementation, at least some of the connected devices 216 may comprise of similar actuators. The similar actuators may include similar functionalities and may also appear visually similar. In one example, the actuator may include touch/press buttons, control panels such as slider controls, touch panels including several keys/buttons, levers and/or gears, knobs etc. for setting the respective connected device 216 in a desired operation mode. In another example, the actuator may include a user-interface, for example, a graphical user-interface such as an icon or any other software-specific interface, comprising one or more objects that translate to an operating instruction for the respective connected device 216, on receiving user-selection.

According to various embodiments of the present disclosure, the electronic device 201 enables viewing and providing control commands over the network 215 to the connected devices 216 through an AR or a VR. To this end, the management module 208 (referring to FIG. 2A) present on the electronic device 201 may perform one or more operations on the electronic device 201 when in a respective AR mode, or a respective VR mode. For example, the management module 208 may perform an operation for displaying multimedia contents corresponding to the connected devices 216 on the display 206 (referring to FIG. 2A). The multimedia contents may be displayed at a user-specified location in the respective AR/VR. Further, the management module 208 may also perform an operation for enabling communication with the connected devices 216 present in the real world environment 217 via interaction with the respective multimedia contents as displayed on the display 206. By way of an example, the interaction can be in the form of gestures performed by a user. The gestures may be performed using finger(s), or hands of the user, that are also defined as actuating mean(s) in the present disclosure.

In order to enable interaction with the multimedia contents, the management module 208 may also perform an operation for displaying an updated multimedia content on the display 206. The updated multimedia content includes a graphical representation of the actuating mean(s) in an operational relationship with a graphical representation of at least one actuator (also referred to as at least one virtual actuator or at least one icon in this disclosure) corresponding to the connected device 216. The graphical representation of the actuating means as an indicator may be rendered in the respective AR/VR based on gesture position information received on the electronic device 201. Further, the position and/or orientation of the graphical representation of the actuating means may be fixed or moved with respect to the graphical representation of the actuator, based on additional gesture-inputs received in relation to the graphical representation of the actuating means. The management module 208, may accordingly perform an operation for recognizing the corresponding gesture for displaying an updated multimedia content and the corresponding gesture(s) for fixing or positioning the graphical representation of the actuating means in the respective AR/VR.

The management module 208 may further perform, for example, an operation for providing control commands to the connected device 216 based on a gesture command information received on the electronic device 201, in relation to the actuator of the connected device. "Gesture command" as used herein refers to gestures performed by a user in order to provide a command to the actuator of the connected device 216. The management module 208 may accordingly perform an operation for recognizing the corresponding gesture commands performed by the user in respective AR/VR in relation to the virtual actuator or icon. Further, the management module 208 may use the gesture command information for generating the control command(s) to be transmitted to the respective connected device 216.

In accordance with an embodiment of the present disclosure, the multimedia content corresponding to the connected devices 216 may include some or all of the functionalities of the respective connected devices 216.

In accordance with an embodiment of the present disclosure, the multimedia content corresponding to the connected device 216 may be a virtual replica of the connected device 216, and/or a pre-recorded replica of the connected device 216. The virtual replica and/or the pre-recorded replica may include, for example, a 360 degree image of the connected device 216, a 360 degree video of the connected device 216, a 3D-model of the connected device 216, a 360 degree panorama image of the connected device 216, a virtual reality based video of the connected device 216, a virtual reality based image of the connected device 216, a real world image of the connected device 216, a 2D image of the connected device 216, a 360 degree image, a 360 degree video with depth-of-field functionality, etc. Further, the multimedia contents may be configured to include audio information, textual information and other multimedia alike features. Further, the display of the multimedia contents may be generated and managed by the management module 208, in accordance with the various teachings of the present disclosure.

By way of an example, the electronic device 201 may receive a gesture in relation to placing the multimedia content at any user-specified or desired location in the respective AR/VR. By way of another example, the electronic device 201 may receive a gesture in relation to viewing moving and/or rotating the multimedia content and/or re-sizing the multimedia content to get different views, in the respective AR/VR etc. By way of another example, the electronic device 201 may receive a gesture in relation to re-allocating a multimedia content of a first connected device 216-1 to a second connected device 216-2. Thus, if the user may desire he may re-allocate the similar appearing virtual replicas or virtual replicas with similar functionalities in the respective AR/VR. Accordingly, an aspect of the present disclosure is to receive a request for re-allocating a multimedia content of a first connected device 216-1 to a second connected device 216-2, in the respective AR/VR, and based on the received request re-allocate the multimedia content of the first connected device 216-1 to the second connected device 216-2. The re-allocation may be at least based on a condition when the first connected device 216-1 and the second connected device 216 may include at least one of: (a) a substantially similar virtual replica; (b) a substantially similar pre-recorded replica; (c) at least one substantially similar functionality, (d) at least one substantially similar actuator. The respective gestures as disclosed herein may be recognised and analysed by the management module 208 to perform the resultant action on the multimedia content in the respective AR/VR.

According to some embodiments of the present disclosure, the updated multimedia content including the graphical representation of the actuator(s), may include some or all of the functionalities of the corresponding actuator of the connected device 216, present in the real world environment 217. The graphical representation of the actuator(s), i.e., the virtual actuator(s) or icon(s) may or may not visually correspond to the actuator(s) of the connected device 216, present in the real world environment 217. However, the functionalities of the graphical representation of the actuator(s) may at least partially overlap with the functionalities of the corresponding actuator of the connected device 216, present in the real world environment 217. In one example, the graphical representation of the actuator(s) may be an imaginary representation which may bear no direct relationship with the actuator present on the connected device 216 present in the real world environment 217. "Imaginary representation" used herein includes a virtual actuator that may bear no visual similarity to the actual actuator of the corresponding connected device 216 present in the real world environment 217. However, the imaginary representation and the actual actuator may include at least similar functionalities with respect to the connected device 216. By way of one example, a washing machine is a connected device 216 present in a real world environment 217, home. The washing machine in the real world environment 217 has a rotary knob as an actuator to set the washing machine in various operation modes. However, the corresponding virtual actuator present in the respective AR/VR may be in the form of a graphical menu-based list including graphical objects that may translate to commands for the connected object 216, on receiving user-selection. Here, the graphical-menu based list is an imaginary representation having no direct relationship with the rotary knob.

In accordance with an embodiment of the present disclosure, the electronic device 201 may display on the display 206 (referring to FIG. 2A), a list of available graphical representations of the actuator(s) corresponding to a connected device 216, wherein the graphical representation of the actuator(s) may receive a user-selection to be displayed in the updated multimedia content corresponding to the connected device 216. In this regard the electronic device 201 may include, or may be coupled to an external virtual actuator database (not shown). The virtual actuator database may include the list of available graphical representations of the actuator(s). The electronic device 201 may retrieve the said list from the virtual actuator database and present the said list on the display 206 to the user to enable the user to make a choice. Based on his preference, the user may select the graphical representation of the actuator(s) to be displayed in the updated multimedia content, irrespective of the actual actuator of the connected device 216 present in the real world environment 217.

The list of available graphical representations of the actuator(s) may include at least one of a pre-recorded replica of an actuator present on the connected device 216, a substantially similar virtual replica of the actuator present in the connected device 216, and an imaginary representation having no direct relationship with the actuator present on the connected device 216. In the above example of a washing machine being present as the connected device 216 in the real world environment 217, the list of available graphical representations of the actuator(s) may include, for example, a graphical representation of a rotary knob, a graphical representation of a sliding-panel and a graphical menu-based list. Based on the user's preference, the updated multimedia content in the AR/VR may include the graphical representation of the rotary knob as present on the connected device 216 in the real world environment 217, or may include a graphical representation of the sliding panel even though the graphical representation of the sliding panel has no direct relationship with the knob.

In accordance with an embodiment of the present disclosure, the actuating means as disclosed in the present disclosure is used by a user of the electronic device 201 to perform gestures in order to interact with the multimedia contents as displayed in the respective AR/VR. The electronic device 201 and the management modules 208 may include one or more modules to capture and analyse the gestures performed using the actuating means in the AR/VR space and accordingly perform an action associated with the gestures as performed. These modules shall be described in greater detail in the foregoing description. According to an aspect of the present disclosure, the electronic device 201 obtains gesture position information associated with the actuating means in the respective AR/VR space when performing the corresponding gesture. Based on the gesture position information, an updated multimedia content is displayed. Further, the graphical representation of the actuating means as rendered in the updated multimedia content is displayed at a location derivable from the gesture position information. In case of an additional content to be overlaid on the multimedia content, the additional content may also be displayed at a location derivable from the gesture position information.

In accordance with an embodiment of the present disclosure, the graphical representation of the actuating means may be displayed in an operational relationship with the graphical representation of an actuator of a connected device 216, within the updated multimedia content corresponding to the connected device 216. In accordance with another embodiment, the graphical representation of the actuating means may also be displayed along with the display of the multimedia contents of one or more connected device 216 in the respective AR/VR. In such case, the graphical representation may be rendered initially at any pre-determined location or at a previously fixed location, in the respective AR/VR.

In accordance with an embodiment, the actuating means may include an indicator such as at least one of a body part and a tool. The actuating means may include, for example, a pointing device, bare hands, palm(s), or finger(s) of the user of the electronic device 201, eye-gaze of the user of the electronic device 201, a marker worn on a finger or hand of the user of the electronic device 201, gloves, etc. which may be used by the user to interact with the multimedia contents and the updated multimedia content in the respective AR/VR. The graphical representation as rendered may include a virtual pointing device or object, virtual hands, virtual palm(s), or virtual finger(s), a virtual line-of sight, a virtual marker respectively. The graphical representations of the actuating means may be selected from any of the available graphical representations of the actuating means. In some case, the graphical representation of the actuating means may form a part of a virtual avatar of the user in the respective AR/VR. By way of one example, when a user may use his hands to perform gestures in the AR/VR, the graphical representation of the hands, also referred to as "virtual hands" are rendered on the display of the electronic device 201. In accordance with one embodiment of the present disclosure, the updated multimedia content may include an additional content overlaid on the multimedia content corresponding to a connected device as displayed in a respective AR or VR. By way of an example, the additional content may include, for example, a pointer, an icon, a shadow etc. that is overlaid on the multimedia content.

Further, in accordance with an embodiment of the present disclosure the graphical representation of the actuating means may visually imitate the gestures which are as performed by the user. Accordingly, when the user provides any gesture-input in the respective AR/VR, the virtual hands as displayed may visually imitate the gesture-input. By way of one example, when the user may perform a pointing gesture in a particular direction, the virtual finger may mimic the gesture and may point in the same direction. By way of another example, when the user may fix his eye-gaze in a particular direction, where his eye-gaze is the actuating means, the virtual line of sight may also be formed towards the same direction.

In accordance with an embodiment of the present disclosure, the electronic device 201 may receive a gesture-input in relation to the graphical representation of the actuating means. The management module 208 may accordingly perform an action in relation to the graphical representation of the actuating means, based on the received gesture-input. Accordingly, the user may provide a gesture-input to move and fix a position and/or orientation of the graphical representation of the actuating means with respect to the graphical representation of an actuator of a connected device 216. Thus, the graphical representation of an actuating means may be brought closer, or to at least partially overlap the graphical representation of the actuator (for example, an icon such as a button, a knob etc.), before provide a gesture command in relation to that actuator.

According to an aspect of the present disclosure, based on the position of graphical representation of the actuating means in the respective AR/VR, one or more actions may be processed to be performed by the management module 208. Therefore, when the position of the graphical representation of the actuating means is detected to be in relation to the position of a virtual actuator, then only the gesture commands in relation to that virtual actuator may be processed so as to generate a control command for the corresponding connected device 216. According to one aspect of the present disclosure, one of the conditions to process a gesture command in relation to an actuator may include at least a partial match between the coordinates of the graphical representation of the actuating means and the coordinates of the graphical representation of the corresponding virtual actuator, in the respective AR/VR.

By way of one example, if a user wants to operate a virtual actuator (for example, an icon such as a virtual button or any virtual touch-panel) using a press gesture, the user may first point in a direction of that virtual actuator so as to fix the graphical representation of the actuating means (for example, an indicator such as a virtual pointing finger) at the position of the virtual actuator. The gestures, i.e., the "point gesture" and "press gesture" maybe recognized and processed by the management module 208 to perform the actions as disclosed herein.

By way of another example, if a user wants to have a better view of a virtual actuator included in a multimedia content, he may have to perform a zoom-in gesture by spreading out his thumb and index finger. Before that, the user may have to position the graphical representation of the actuating means (for example, indicators such as virtual hands) on the virtual actuator displayed within the updated multimedia content. Only when the coordinates of the virtual hand and the coordinates of the virtual actuator may match, the corresponding zoom-in gesture in relation to the virtual actuator may be processed. The gestures, i.e., the "zoom-in gesture" and "place gesture" maybe recognized and processed by the management module 208 to perform the actions as disclosed herein.

In accordance with an embodiment of the present disclosure, the multimedia content and a respective updated multimedia content corresponding to a connected device 216, may be displayed in an AR, also referred to as "AR environment", and "AR view", in the present disclosure. In one example, the AR may be a real environment surrounding the electronic device 201 augmented with the multimedia content and/or the respective updated multimedia content. In another example, the AR view is a live-feed of an environment that may not be a surrounding environment of the electronic device 201. The live-feed of the environment includes a real world environment 217 viewable in real-time. In one such example, the live-feed may also be from more than one real world environment 217. For example, the AR view may include a live-feed of a drawing room and a live-feed of a kitchen from a home environment.

In accordance with another embodiment of the present disclosure, the multimedia content and a respective updated multimedia content corresponding to a connected device 216, may be displayed in a VR view. The VR view may include a computer-generated image of a real world environment 217 and may also be referred to as a "virtually created environment". In accordance with yet another embodiment of the present disclosure, the multimedia content and a respective updated multimedia content corresponding to a connected device 216 is displayed in a pre-recorded digital view, also referred to as "pre-recorded environment" in this disclosure. By way of an example, a pre-recorded environment can resemble the user's real world environment 217 such as office, home environment, medical facility, educational institution, factory, industrial site, a simulated environment or an imaginary world. By way of another example, the pre-recorded view may include two or more physically separated real world environments 217.

In accordance with an embodiment of the present disclosure, the updated multimedia content corresponding to a connected device 216 may be displayed in an AR view or a VR view by overlaying the updated multimedia content over the corresponding multimedia content of the connected device 216, as displayed in the respective AR view or the respective VR view. By way of an example, the updated multimedia content as overlaid over the displayed multimedia content may include an additional content which may include for example, a pointer, an icon, graphical representation of the actuating means, a shadow etc.

In accordance with another embodiment, the updated multimedia content corresponding to a connected device 216 may be displayed in an AR view or a VR view by changing or replacing the previously displayed view (AR/VR) or changing or replacing the corresponding multimedia content in the previously displayed view (AR/VR). By way of one example, the live-feed of a real environment 217 including a multimedia content of a washing machine may change into another live-feed environment including an updated multimedia content of the washing machine, where the updated multimedia content may include a zoomed-in portion of the graphical representation(s) of the actuator(s) of the washing machine, and at least one additional content (for example, a pointer, an icon, a shadow etc.) or a graphical representation of an actuating means, in an operational relationship with one of the virtual actuator(s) of the washing machine. In another example, where the multimedia content includes a video file or a 3-D image file of the connected device 216, the corresponding updated multimedia content may be displayed by changing or replacing the previously displayed video file or the 3-D image file of the connected device 216 with a new video file or a new 3-D image file of the connected device 216.

Further, according to an embodiment of the present disclosure, the connected devices 216 regularly transmit their status information to network 215. The connected devices 216 may also update their status based on instructions received from the electronic device 201 functioning in a respective AR mode, or a VR mode, over the network 215. Such status information may be associated with operating parameters of the connected device 216 which may include, for example, a power status, energy usage, a device mode and a condition of the device and other such related information. The device mode may include a mode of operation, and network connection. By way of an example, a connected device 216 includes an air-conditioner, wherein the air-conditioner provides real-time status information of the following operating parameters:

**[Table 1]**

| **Operating Parameters** | **Status Information** |
|---|---|
| Power Button | ON or OFF |
| Temperature | Current Temperature Setting |
| Mode | Dry/Cool/Auto |
| Power Saver | ON or OFF |
| Timer | Set/Unset |

Further, the electronic device 201 is coupled to a status database 218 that stores the status information as received from the connected devices 216. In an example, the status database 218 may be external to the electronic device 201, as illustrated in FIG. 2B. In one option, the electronic device 201 may access the status database 218 directly. In another option, the electronic device 201 may access the status database 218 over the network 215. In another example (not shown in FIG. 2B), the status database 218 may be internal to the electronic device 201. The status information may be stored, for example, in a tabular form illustrated in below Table 2.

**[Table 2]**

| Account ID | Unique Device ID | Device Status/Status Information |
|---|---|---|
| | | |
| | | |

In the Table 2, the Account ID is a user-identification data registered for a user of the electronic device 201. By way of an example, when a user registers first time to use the AR/VR capabilities of the electronic device 201 to control one or more connected objects 216, an Account ID is created to uniquely identify the user. Further, the Unique Device ID is a connected device identification data registered for each connected device 216, which the user wishes to operate using the electronic device 201, in a respective AR mode, or a VR mode. One Account ID may have multiple connected devices 216 linked to it via their Unique Device IDs. By way of an example, the multiple connected devices 216 linked to one Account ID, may be used together to augment the reality of a particular user. Further, the Unique Device ID may be include as an information in each packet transmitted or received at the electronic device 201 over the network 215, to uniquely identify the respective connected device 216. Such packets may be transmitted while updating the status of the connected device 216 or when receiving a status update from the connected device 216.

In one implementation, the electronic device 201 obtains the status information from an intermediary device 219 communicatively coupled with the connected devices 216. The intermediary device 219 can be any device having transmitting and receiving capabilities and is connected with the connected devices 216 and the electronic device 201. As such, the intermediary device 219 enables transmission of data by the connected device(s) 216 over the network 215 when the connected devices 216 are not able to connect with the network 215 directly. The intermediary device 219 can support various communication technologies such as Bluetooth, Zigbee, Z-Wave, 6LowPAN, Thread, Wi-Fi, Mobile Cellular, NFC, Sigfox, Neul, LoRaWAN, Satellite, Ethernet, and HART. Example of the intermediary device 219 is an Internet gateway.

Further, in one implementation, the intermediary device 219 can provide the status information in real time when requested by electronic device 201. In one implementation, the intermediary device 219 can provide the status information by periodically polling the transmitting devices 216. In such implementation, the intermediary device 219 can provide the status information when a value of said at least one device parameter changes. In such implementation, the intermediary device 219 can also provide the status information when a value of said at least one device parameter exceeds a predetermined threshold level. In one example, the intermediary device 219 can obtain information from the connected device 216. In another example, the intermediary device 219 can obtain information from a second connected device 216-2 connected with a first connected device 216-1 to obtain the information of the first connected device 216-1 and/or the second connected device 216-2.

In accordance with an embodiment of the present disclosure, the management module 208 enables the multimedia contents as displayed to depict a current status of the respective connected devices 216. Further, the management module 208 enables receiving as well as updating the status of the connected device 216 in real-time, and accordingly updates the display of the multimedia contents to depict an updated status of the connected devices 216.

By way of an example, the electronic device 201 sends a request for updated status information over the network 215 to a connected device 216. The request includes the Unique Device ID of that connected device 216. In response, the connected device 216 sends a status packet, for example, as illustrated in the following Table 3 'status packet', over the network 215 to the electronic device 216 for updating the real-time status information of the respective connected device 216.

**[Table 3]**

| STATUS PACKET | |
|---|---|
| PARAMETER NAME | CURRENT STATUS |
| Account ID | |
| Unique Device ID | |
| Date & Time Stamp | |
| Custom Parameter 1 | |
| Custom Parameter 2 | |
| Custom Parameter 3 | |
| Custom Parameter N | |

In the above illustrated Table 3, the 'Parameter Name' represents various information as available in the status packet transmitted over the network 215, and 'Current Status' represents the associated values for these information. 'Custom Parameter' represents one or more operation parameters of the respective connected device 216, as explained above. Further, on receiving the updated status packet from the connected device 216, the management module 208 present on the electronic device 201 updates the display of the multimedia content to depict an updated status of the connected device 216.

By way of another example, when the electronic device 201 provides control command to the connected device 216, over the network 215, the connected device 216 may update its status in response to the received control command. For example, a multimedia content corresponding to a connected device 216 currently displays 'POWER ON' status information. If a control command to turn-off the power of the connected device 216 is received by the electronic device 201, the relevant control command is sent to the connected device 216. Accordingly, the connected device 216 updates its power status. On receiving the updating acknowledgement from the connected device 216 on the electronic device 201, the current status as depicted in the multimedia content is updated to display 'POWER OFF' status information.

In accordance with various embodiments of the present disclosure, multimedia contents corresponding to the respective connected devices 216 may be placed in the respective AR/VR based on one or more location parameters detected from the surrounding AR/VR view of the electronic device 201. In one example, the electronic device 201 may include a GPS (Global Positioning System) unit (not shown in FIG. 2B) or other instruments that may provide the current location details of the electronic device 201. Accordingly, the multimedia contents that are to be placed in the vicinity of the electronic device 201 may be identified. Further, the electronic device 201 may also rely on a positioning system (not shown in FIG. 2B) for exact placement of the identified multimedia contents in the respective AR/VR. The positioning system may utilize a specific positioning technique for the respective AR/VR which enables identifies exact placement location for a particular multimedia content of a corresponding connected device 216. Examples of positioning techniques may include for example, vision based techniques, which may further include use of markers or marker less tracking or marker less 3D tracking, image processing techniques, triangulation techniques, view analysis etc. The positioning systems shall be discussed in detail with respect to a specific AR device and VR device with reference to FIGS. 4 and 5.

By way of an example, the multimedia contents are placed in an AR based on parameters including, but not limited to, a marker-based identified region, at least one of location coordinates of the physical objects present in a real scene viewed in the AR, prominent features of the physical objects present in the surrounding view of the electronic device 201, features extracted from a 360 degree view of the surrounding view of the device 201, orientation and direction of the electronic device 201,etc. In another example, the multimedia contents are placed in a VR based on parameters including, but not limited to, location coordinates in a 3D coordinate system, or a world coordinate system or any other known coordinate system, being applied on the VR, and a 360 degree view of the VR.

According to an embodiment of the present disclosure, a placement command for placing a multimedia content in the respective AR/VR is provided to the electronic device 201 via a respective AR/VR enabled input unit which may include, for example, the actuating means as disclosed above. By way of an example, the placement command may be provided using a pointing gesture via the AR/VR enabled input unit for placing the multimedia content corresponding to a respective connected device 216 at a desired location in the respective AR/VR. Once the placement command for placing a multimedia content corresponding to a connected device 216 is detected, positioning information associated with the placement command is detected. The multimedia content is placed or displayed at a position in the AR/VR based on the detected position information. In the above example, where the placement command is by way of pointing gesture, the respective gesture position information of the pointing gesture in the AR/VR may be identified. Based on the gesture position information, a location for placing the multimedia content in the AR/VR may be identified. Accordingly, the multimedia content may be placed at the identified location in the respective AR/VR.

Further, after placing the multimedia content, the various location parameters, as explained above, are detected from the environment (AR/VR) that includes at least the placed multimedia content. The parameters thus detected may be mapped to information pertaining to the corresponding multimedia content, which are then stored as placement information for that multimedia content, in a placement database 220 as shown in FIG. 2B. In accordance with an embodiment of the present information, the electronic device 201 is coupled to the placement database 220, and places the multimedia contents in the respective AR/VR in accordance with the placement information as stored in the placement database 220.

In one option, the electronic device 201 may access the placement database 220 directly. In another option, the electronic device 201 may access the placement database 220 over the network 215. In another example (not shown in FIG. 2B), the placement database 220 may be internal to the electronic device 201. The placement information may be stored, for example, in a tabular form, as illustrated in below Table 4.

**[Table 4]**

| Account ID | Unique Device ID | Parameters detected from 360 degree view | Position/Orientation of the device 201 |
|---|---|---|---|
| | | | |
| | | | |

The Table 4 as shown above includes an Account ID indicative of a registered user of the electronic device 201, corresponding unique Device IDs, each indicative of a connected device 216, and a corresponding placement information for each of the connected device 216. The corresponding placement information in the above Table 4 is in the form of parameters as detected from the 360 degree view of the AR/VR after placing the multimedia content in the respective AR/VR. These parameters may be detected by the type of positioning system in-use, as discussed above.

In the above example, when a placement command for placing a multimedia content in a respective AR/VR view is detected by the electronic device 201, the parameters from the respective AR/VR view may be detected which are suitably mapped with information pertaining to a multimedia content, the information may include, for example, the Unique Device ID of the connected device 216. The parameters thus mapped to the multimedia content are stored in the Table 4 for subsequently placing that multimedia content in the respective AR/VR

Further, Table 4 may also include position and/or an orientation of the electronic device 201 while viewing the AR/VR, after placing the multimedia content of the connected device 216 in the respective AR/VR. As explained above, a GPS unit or any other instrument such as external or internal gyros present in the electronic device 201 may be used to determine the position/location and orientation of the electronic device 201. Accordingly, the position and/or orientation of the electronic device 201 are also stored in the placement database 220 for the multimedia contents. Accordingly, the multimedia contents of the connected devices 216 which are to be placed in the vicinity of the electronic device 201 in the respective AR/VR are identified based on the stored position and/or orientation information.

For example, when a current position of the electronic device 201 is detected to closely match the stored position information in the placement database 220, the multimedia content to which the position information is mapped to, is identified to be placed in the vicinity of the electronic device 201. Further, after a multimedia content is identified to be in a vicinity of the electronic device 201, the other location parameter as stored in Table 4, are utilized to place the multimedia contents in an exact desired location in the respective AR/VR.

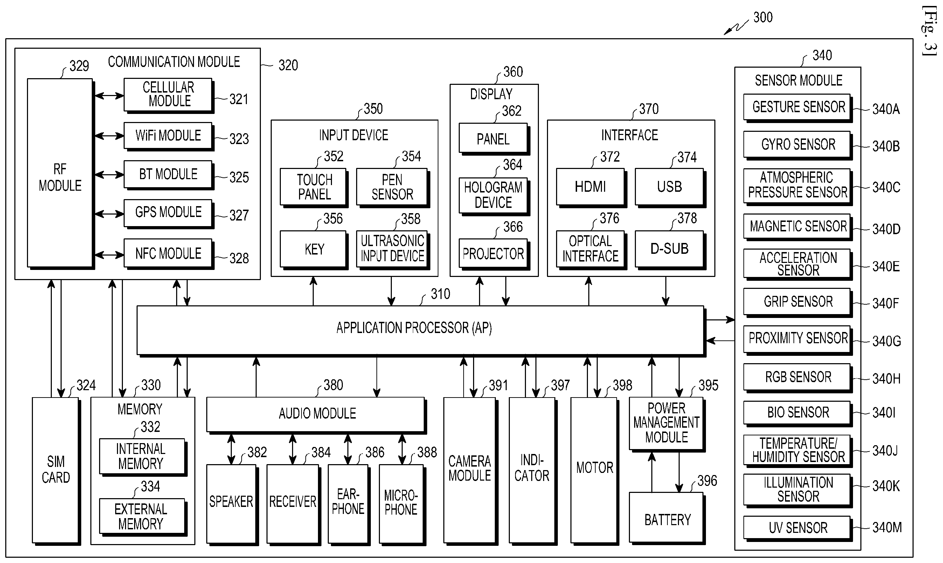

FIG. 3 illustrates an electronic device 300 in accordance with various embodiments of the present disclosure. The electronic device 300 may form, for example, the whole or part of the electronic device 201 as shown in FIGS. 2A and 2B. Referring to FIG. 3, the electronic device 300 may include at least one application processor (AP) 310, a communication module 320, a subscriber identification module (SIM) card 324, a memory 330, a sensor module 340, an input unit 350, a display 360, an interface 370, an audio module 380, a camera module 391, a power management module 395, a battery 396, an indicator 397, and a motor 398.

The AP 310 may be same as the processor 203 as shown in FIG. 2A. The AP 310 may drive an operating system or applications, control a plurality of hardware or software components connected thereto, and also perform processing and operation for various data including multimedia data. According to an embodiment, the AP 310 may further include a graphic processing unit (GPU) (not shown).

The communication module 320 may be the communication interface 207 as shown in FIG. 2A. The communication module 320 may perform a data communication with any other electronic device (e.g., the electronic device 213 or the server 214) connected to the electronic device 300 (e.g., the electronic device 201) through the network. According to an embodiment, the communication module 320 may include therein a cellular module 321, a Wi-Fi module 323, a BT module 325, a GPS module 327, an NFC module 328, and a radio frequency (RF) module 329.

The cellular module 321 may offer a voice call, a video call, a message service, an internet service, or the like through a communication network (e.g., LTE, LTE-A, CDMA, WCDMA, UMTS, WiBro, or GSM, etc.). Additionally, the cellular module 321 may perform identification and authentication of the electronic device in the communication network, using the SIM card 324. According to an embodiment, the cellular module 321 may perform at least part of functions the AP 310 can provide. For example, the cellular module 321 may perform at least part of a multimedia control function.

According to an embodiment, the cellular module 321 may include a communication processor (CP). Additionally, the cellular module 321 may be formed of SoC, for example. Although some elements such as the cellular module 321 (e.g., the CP), the memory 330, or the power management module 395 are shown as separate elements being different from the AP 310 in FIG. 3, the AP 310 may be formed to have at least part (e.g., the cellular module 321) of the above elements in an embodiment.

According to an embodiment, the AP 310 or the cellular module 321 (e.g., the CP) may load commands or data, received from a non-volatile memory connected thereto or from at least one of the other elements, into a volatile memory to process them. Additionally, the AP 310 or the cellular module 321 may store data, received from or created at one or more of the other elements, in the non-volatile memory.

Each of the Wi-Fi module 323, the BT module 325, the GPS module 327 and the NFC module 328 may include a processor for processing data transmitted or received there through. Although FIG. 3 shows the cellular module 321, the Wi-Fi module 323, the BT module 325, the GPS module 327 and the NFC module 328 as different blocks, at least part of them may be contained in a single integrated circuit (IC) chip or a single IC package in an embodiment. For example, at least part (e.g., the CP corresponding to the cellular module 321 and a Wi-Fi processor corresponding to the Wi-Fi module 323) of respective processors corresponding to the cellular module 321, the Wi-Fi module 323, the BT module 325, the GPS module 327 and the NFC module 328 may be formed as a single SoC.

The RF module 329 may transmit and receive data, e.g., RF signals or any other electric signals. Although not shown, the RF module 329 may include a transceiver, a power amp module (PAM), a frequency filter, a low noise amplifier (LNA), or the like. Also, the RF module 329 may include any component, e.g., a wire or a conductor, for transmission of electromagnetic waves in a free air space. Although FIG. 3 shows that the cellular module 321, the Wi-Fi module 323, the BT module 325, the GPS module 327 and the NFC module 328 share the RF module 329, at least one of them may perform transmission and reception of RF signals through a separate RF module in an embodiment.

The SIM card 324 may be a specific card formed of SIM and may be inserted into a respective slot (not shown) formed at a certain place of the electronic device 300. The SIM card 324_N may contain therein an integrated circuit card identifier (ICCID) or an international mobile subscriber identity (IMSI).

The memory 330 (e.g., the memory 204) may include an internal memory 332 and an external memory 334. The internal memory 332 may include, for example, at least one of a volatile memory (e.g., dynamic RAM (DRAM), static RAM (SRAM), synchronous DRAM (SDRAM), etc.) or a non-volatile memory (e.g., one time programmable ROM (OTPROM), programmable ROM (PROM), erasable and programmable ROM (EPROM), electrically erasable and programmable ROM (EEPROM), mask ROM, flash ROM, NAND flash memory, NOR flash memory, etc.).

According to an embodiment, the internal memory 332 may have the form of a solid state drive (SSD). The external memory 334 may include a flash drive, e.g., compact flash (CF), secure digital (SD), micro secure digital (Micro-SD), Mini secure digital (Mini-SD), extreme digital (xD), memory stick, or the like. The external memory 334 may be functionally connected to the electronic device 300 through various interfaces. According to an embodiment, the electronic device 300may further include a storage device or medium such as a hard drive.

The sensor module 340 may measure physical quantity or sense an operating status of the electronic device 300, and then convert measured or sensed information into electric signals. The sensor module 340 may include, for example, at least one of a gesture sensor 340A, a gyro sensor 340B, an atmospheric sensor 340C, a magnetic sensor 340D, an acceleration sensor 340E, a grip sensor 340F, a proximity sensor 340G, a color sensor 340H (e.g., red, green, blue (RGB) sensor), a biometric sensor 340I, a temperature-humidity sensor 340J, an illumination sensor 340K, and a ultraviolet (UV) sensor 340M. Additionally or alternatively, the sensor module 340 may include, e.g., an E-nose sensor (not shown), an electromyography (EMG) sensor (not shown), an electroencephalogram (EEG) sensor (not shown), an electrocardiogram (ECG) sensor (not shown), an infrared (IR) sensor (not shown), an iris scan sensor (not shown), or a finger scan sensor (not shown). Also, the sensor module 340 may include a control circuit for controlling one or more sensors equipped therein.

The input unit 350 may include a touch panel 352, a digital pen sensor 354, a key 356, or an ultrasonic input unit 358. The touch panel 352 may recognize a touch input in a manner of capacitive type, resistive type, infrared type, or ultrasonic type. Also, the touch panel 352 may further include a control circuit. In an embodiment including a capacitive type, a physical contact or proximity may be recognized. The touch panel 352 may further include a tactile layer. In this example, the touch panel 352 may offer a tactile feedback to a user.

The digital pen sensor 354 may be formed in the same or similar manner as receiving a touch input or by using a separate recognition sheet. The key 356 may include, for example, a physical button, an optical key, or a keypad. The ultrasonic input unit 358 is a specific device capable of identifying data by sensing sound waves with a microphone 388 in the electronic device 300 through an input tool that generates ultrasonic signals, thus allowing wireless recognition. According to an embodiment, the electronic device 300 may receive a user input from any external device (e.g., a computer or a server) connected thereto through the communication module 320.

The display 360 (e.g., the display 350) may include a panel 362, a hologram 364, or a projector 366. The panel 362 may be, for example, liquid crystal display (LCD), active matrix organic light emitting diode (AM-OLED), or the like. The panel 362 may have a flexible, transparent or wearable form. The panel 362 may be formed of a single module with the touch panel 352. The hologram 364 may show a stereoscopic image in the air using interference of light. The projector 366 may project an image onto a screen, which may be located at the inside or outside of the electronic device 300. According to an embodiment, the display 360 may further include a control circuit for controlling the panel 362, the hologram 364, and the projector 366.

The interface 370 may include, for example, a high-definition multimedia interface (HDMI) 372, a universal serial bus (USB) 374, an optical interface 376, or a D-subminiature (D-sub) 378. The interface 370 may be contained, for example, in the communication interface 207 as shown in FIG. 2A. Additionally or alternatively, the interface 370 may include, for example, a (mobile high-definition link (MHL) interface, a secure digital (SD) card/multi-media card (MMC) interface, or an infrared data association (IrDA) interface.

The audio module 380 may perform a conversion between sounds and electric signals. At least part of the audio module 380 may be contained, for example, in the I/O interface 205 shown in FIG. 2A. The audio module 380 may process sound information inputted or outputted through a speaker 382, a receiver 384, an earphone 386, or a microphone 388.

The camera module 391 is a device capable of obtaining still images and moving images. According to an embodiment, the camera module 391 may include at least one image sensor (e.g., a front sensor or a rear sensor), a lens (not shown), an image signal processor (ISP)(not shown), or a flash (e.g., LED or xenon lamp, not shown).

The power management module 395 may manage electric power of the electronic device 300. Although not shown, the power management module 395 may include, for example, a power management integrated circuit (PMIC), a charger IC, or a battery or fuel gauge.

The PMIC may be formed, for example, of an IC chip or SoC. Charging may be performed in a wired or wireless manner. The charger IC may charge a battery 396 and prevent overvoltage or overcurrent from a charger. According to an embodiment, the charger IC may have a charger IC used for at least one of wired and wireless charging types. A wireless charging type may include, for example, a magnetic resonance type, a magnetic induction type, or an electromagnetic type. Any additional circuit for a wireless charging may be further used such as a coil loop, a resonance circuit, or a rectifier.

The battery gauge may measure the residual amount of the battery 396 and a voltage, current or temperature in a charging process. The battery 396 may store or create electric power therein and supply electric power to the electronic device 300. The battery 396 may be, for example, a rechargeable battery or a solar battery.

The indicator 397 may show thereon a current status (e.g., a booting status, a message status, or a recharging status) of the electronic device 300 or of its part (e.g., the AP 310). The motor 398 may convert an electric signal into a mechanical vibration. Although not shown, the electronic device 300 may include a specific processor (e.g., GPU) for supporting a mobile TV. This processor may process media data that comply with standards of digital multimedia broadcasting (DMB), digital video broadcasting (DVB), or media flow.

Each of the above-discussed elements of the electronic device disclosed herein may be formed of one or more components, and its name may be varied according to the type of the electronic device. The electronic device disclosed herein may be formed of at least one of the above-discussed elements without some elements or with additional other elements. Some of the elements may be integrated into a single entity that still performs the same functions as those of such elements before integrated.

The term "module" used in this disclosure may refer to a certain unit that includes one of hardware, software and firmware or any combination thereof. The module may be interchangeably used with unit, logic, logical block, component, or circuit, for example. The module may be the minimum unit, or part thereof, which performs one or more particular functions. The module may be formed mechanically or electronically. For example, the module disclosed herein may include at least one of application-specific integrated circuit (ASIC) chip, field-programmable gate arrays (FPGAs), and programmable-logic device, which have been known or are to be developed.

FIGS. 4A and 4B illustrate various components of a VR device 401 that provides VR so as to provide control command to at least one connected device 216 (not shown in FIGS. 4A and 4B) in the VR, in accordance with an embodiment of the present disclosure. The VR device 401 may form, for example, the whole or part of the electronic device 300 as shown in FIG. 3, and the electronic device 201 as shown in FIGS. 2A and 2B.

Referring to FIG. 4B, the VR device 401 at least includes a VR enabled input unit 402, an imaging unit 403, a VR enabled display 404 (for example, the display 206), a memory 405 (for example, the memory 204), an output unit 406, and a VR management module 407. The VR management module 407 may be the management module 208 of the electronic device 201. Referring to FIG. 4B, the VR management module 407 includes a gesture recognizing unit 408, a gesture mapping unit 409, a gesture analysing unit 411, a rendering unit 412 and a control command generation module 414. In one embodiment, the VR management module 407 may also include a depth perception unit 410 (shown by dotted lines in the FIG. 4B to indicate an optional presence of the depth perception unit 410). In one embodiment, the VR management module 407 may also include a positioning unit 413 (shown by dotted lines in FIG. 4B to indicate an optional presence of the positioning unit 413). It should be understood that in some embodiments, the one or more components as explained herein may form part of a single component. The foregoing description shall now explain the various operations of the components of the VR device 401 in conjunction with FIGS. 4A and 4B. Reference shall be made to FIG. 4B for explaining various functioning of the VR management module 407.

Referring to FIG. 4A, a VR enabled input unit 402 is integrated with the VR device 401. In another implementation, the VR enabled input unit 402 may be communicatively coupled with the VR device 401. In accordance with an embodiment of the present disclosure, the VR enabled input unit 402 may receive a user-input in the form of hand or finger gestures performed using the actuating means as disclosed above, in the VR space. However, the user-input may also be received in various other gesture forms which may include for example, swipe, touch such as pattern and voice recognition gestures, voice control or a cursor direction key, eye-gaze etc. In order to process and analyse the gestures, the gesture movements as performed may be captured in the form of images by an imaging unit 403 as shown in FIG. 4A. Further, the gestures as detected are provided as user-input to the VR enabled input unit 402 which may further communicate the received user-input to the VR device 401, for example, via the I/O interface 205, as shown in FIG. 2A. Based on the received user-input, one or more operations may be performed by the VR management module 407. Examples of the VR enabled input unit 402 may include, but not limited to, actuating means as explained above, smart gloves, joystick, smart stylus, smart touch interface, eye gaze tracking input device, and voice input device.

In accordance with an embodiment of the present disclosure, the VR enabled input unit 402 may receive input in the form of a gesture performed using an actuating means in the space when wearing/using the VR device 401, where the gesture movements are captured in the form of images by the imaging unit 403. The term "space" herein refers to a space in the VR provided by the VR device 401, and may accordingly be also referred to as "virtual reality space" or "VR space". The actuating means, for example, may include a pointing device, bare hands and fingers of the user of the VR device 401, eye-gaze of the user of the VR device 401, a marker worn on a finger or hand of the user of the VR device 401 to track the position of the finger or the hand is space, and gloves. Further, as also explained above, a graphical representation of the corresponding actuating means in the VR space is also rendered on the VR enabled display 404, where the graphical representation of the corresponding actuating means may be seen in the VR space virtually imitating the gestures as performed by the user in the VR space, using the actuating means.

According to an embodiment of the present disclosure, a gesture-input may be received on the VR enabled input unit 402 to provide a command for controlling a connected device 216. Herein, the gesture-input may also be referred to as a gesture command. Such gesture-command is received in relation to an updated multimedia content corresponding to the connected device 216. Accordingly, the imaging unit 403 may capture a gesture-command performed via the actuating means and on detection of the gesture-command the gesture-command may be translated into a corresponding control command for the connected device 216. In accordance with an embodiment of the present disclosure, the control command as translated is based on a correlation between a gesture command information and the actuator.

There may be more than one gesture-command for providing control commands to the connected device 216, where each gesture-command is translated into a specific control command for the connected device 216. For example, for switching ON a connected device one type of gesture may be performed whereas for setting a control on a device-parameter of the connected device 216, another type of gesture may be performed. The gesture-commands may also differ on the basis of the selection of the graphical representation of the actuator, i.e., the virtual actuator, as displayed within the updated multimedia content in the VR. For example, the gesture-command in relation to a virtual press button may differ from the gesture commands in relation to a virtual rotational knob. Further, different connected devices 216 may have different types of gesture-commands based their respective operation parameters. Accordingly, the rules for translating a gesture-command into a corresponding control command may be pre-defined and stored.

Apart from gesture-commands for providing control commands to the respective connected devices 216, there may be other types of gesture-inputs which may be predefined for interacting with the respective multimedia content and the respective updated multimedia content of a connected device 216, in the VR space. Each of these other types-of gesture inputs may be translated into a corresponding command for an operation to be performed in the VR.

An aspect of the present disclosure is to provide a gesture-input database (not shown). The gesture-input database may include at least a list of pre-defined gesture-inputs and associated rules for executing a corresponding command, where the list of pre-defined gesture-inputs may include one or more gesture-commands for providing a control command for a connected device 216, one or more gesture-inputs for positioning the graphical representation of the actuating means in the VR, one or more gesture-inputs for placing (also referred to as placement commands in the present disclosure) the multimedia content in the VR, one or more gesture inputs for selecting the graphical representation of the actuator, one or more gesture inputs for controlling the display of the graphical representation of the actuating means, the display of the graphical representation of the multimedia content and the display of the updated multimedia content. In addition to the disclosed gesture-inputs there may be other user-defined feature inputs which can be created by the user in order to interact with the multimedia contents and the updated multimedia contents of the corresponding connected devices 216 in the VR space. Such gesture-inputs once created can be stored in the gesture-input database for future reference.

Further, a gesture-input database may be available for each connected device 216 and a corresponding multimedia content. The gesture-input database may be present on the VR device 401, for example in the memory 405, or may be coupled to the VR device 401. In one embodiment the gesture-input database may be present on a server, (for example the server 214 as shown in FIG. 2A) and may be accessed by the VR device 401 over a network (for example, the network 215 as shown in FIG. 2A). The server may be a VR server including details of the connected devices 216 along with the details of their corresponding multimedia contents. The details of the multimedia contents may include at least the positioning coordinates of the multimedia contents in the VR and details of the graphical representation of the actuator to be displayed in the VR.

Some of the gesture-inputs apart from the gesture-commands as stored in the gesture-input database shall now be described. According to an embodiment of the present disclosure, a gesture-input may be received on the VR enabled input unit 402 to provide a placement command for placing a multimedia content in the VR. Herein, the gesture-input may also be referred to as a placement command. Such placement-command is received in relation to a multimedia content corresponding to the connected device 216. Accordingly, the imaging unit 403 may capture a placement command performed via the actuating means and on detection of the placement command, the multimedia content may be placed at designated coordinates in the VR in accordance with the placement command.

According to another embodiment of the present disclosure, a gesture-input may be received on the VR enabled input unit 402 to position the graphical representation of the actuating means at a desired location in the VR. The desired location may include at least the position of a virtual actuator as displayed in the VR. Such gesture-input is received in relation to the graphical representation of the actuating means. Accordingly, the imaging unit 403 may capture such gesture-input and on detection of such gesture-input, the graphical representation of the actuating means may be positioned in the VR in accordance with the gesture as performed in the VR.

According to an embodiment of the present disclosure, a gesture-input may be received on the VR enabled input unit 402 to provide a command for controlling the display of the graphical representation of the actuating means. According to another embodiment of the present disclosure, a gesture-input may be received on the VR enabled input unit 402 to provide a command for controlling/selecting the graphical representation of the actuator as displayed within the updated multimedia content. According to yet another embodiment of the present disclosure, a gesture-input may be received on the VR enabled input unit 402 to provide a command for controlling the display of the multimedia content corresponding to a connected device 216 in the VR space. Accordingly, the imaging unit 403 may capture the gesture-inputs in relation to controlling the display of the multimedia content and the updated multimedia content, and on detection of the type of gesture-input, the appropriate control may be applied on the respective multimedia content and the updated multimedia content as displayed in the VR.

According to an embodiment of the present disclosure, a gesture-input may be received on the VR enabled input unit 402 to provide a request for re-allocation in relation to a multimedia content corresponding to a first connected device 216-1 to a second connected device 216-2. Accordingly, the imaging unit 403 may capture the gesture-input in relation to a request for re-allocation and on detection of such gesture-input may re-allocate the multimedia content of the first connected device 216-1 to the second connected device 216-2.

In view of the different types of gesture-inputs disclosed above, the gesture-inputs as stored in the gesture-input database may also be classified on the basis of the resulting operation on translating the gesture-inputs into corresponding commands. For example, Type 1 gesture-inputs may be specific to providing gesture commands in relation to an actuator of a connected device 216, Type 2 gesture-inputs may be specific to positioning the graphical representation of the actuating means in the VR and controlling the movement of the graphical representation of the actuating means in the VR, Type 3 gesture-inputs may be specific to controlling the display of the graphical representations of the actuating means and the graphical representation of the actuator, Type 4 gesture-inputs may be specific to placing the multimedia content in the VR, controlling the view and display of the multimedia contents in the VR, controlling the view and display of the updated multimedia contents in the VR, selecting the graphical representation of the actuator, etc. However, such classification should not be construed as a limitation to the present disclosure and may be defined differently for each VR and each connected device 216 including or excluding one or more gesture-inputs. Further, even when a first type of gesture-input may be performed in the VR to perform a specific operation, a second type gesture-input may also be performed and processed for performing another operation. By way of an example, in order to provide a control command for a connected device 216, a Type 1 gesture-input/gesture-command may be performed in the VR, for e.g., pressing gesture. But, before performing the pressing gesture, the graphical representation of the actuating means has to be brought closer to or positioned on a desired virtual actuator of the updated multimedia content corresponding to the connected device 216, in the VR. Accordingly, a Type 2 gesture, for example a pointing gesture may be performed in the VR before performing the Type **1-**gesture-input. The different types of gestures such as pressing gesture and pointing gestures are captured and analysed by the imaging unit 403.

The imaging unit 403 captures the images in the VR where the images may include the various instances of the gesture movements as performed by a user in the VR when using/wearing the VR device 401. The imaging unit 403 may include includes at least one camera device to capture such images. In another embodiment, the imaging unit 403 may include a dual camera to capture the images along with the depth information of the gesture from the images. Further, the imaging unit 403 may also identify position of the actuating means in the VR space at the time of performing the gesture, also referred to as the gesture-position information in the present disclosure. Examples of imaging unit 403 include, but are not limited to, 2D cameras, 3D cameras, omnidirectional cameras, stereo cameras, etc. The images as captured by the imaging unit is provided to the gesture recognition unit 408 which may analyse the images to recognize common gestures such as press, swiping, tapping, sliding etc.

In accordance with an embodiment of the present disclosure, the imaging unit 403 may function in conjunction with a depth perception unit 410 (referring to FIG. 4B). The depth perception unit 410 may include depth sensors that enable accurately identifying various hand gesture recognition from the image as captured by the imaging unit 403. The depth perception unit 410 may comprise, for example, depth and motion sensors, also referred to as depth-based cameras, which may extract geometric information of the fingertips position of the hands while performing each gesture to accurately identify the gestures. By way of an example, the depth perception unit 410 includes a stereo imaging system wherein at least two stereo cameras are used. The stereo images as captured by the two stereo cameras uses multiple images of the same scene taken from different locations. The multiple images as captured are related in such a way to provide a relative movement of an object between two or more views, also known as disparity. Further, since the stereo cameras are spatially separated, disparity results as a function of depth. Disparity may be found by matching prescribed common points between images as captured by the respective two stereo cameras. However, other depth sensors technology may also be used that enable recognizing gestures. The depth perception unit 410 may enable identifying gestures including, for example, grab gesture, point gesture, press gesture, pinch and zoom gesture, forward/backward movement gesture, turn left/right gesture, and stop gesture.

Referring to FIG. 4B, the gesture recognition unit 408 may receive inputs from the imaging unit 403. In one embodiment, wherein the depth perception unit 410 is also utilized, the gesture recognition unit 408 may also receive an input from the depth perception unit 410. Based on the inputs received, the gesture recognizing unit 408 may utilize one or more techniques to detect the intended gesture from the images as captured by the imaging unit 403 in the VR. By way of an example, the gesture recognition unit 408 may apply artificial intelligence and/or machine learning to recognize the gestures. Accordingly, when the VR device 401 is trained for the first time to store a gesture in a gesture database, the gesture recognition unit 408 may apply machine learning to recognize the same gesture in future when identifying matching details in the gesture database. The gesture database may be same as the gesture-input database, as explained above, or may be a separate database (not shown in FIG. 4B). As will be understood, the gesture database may be stored in the memory 405, or may be coupled to the VR device 401. In another implementation the gesture database may be stored on the VR server, as mentioned above.

By way of an example, a gesture may be performed by a user of the VR device 401 using his actual hands. The imaging unit 403 may capture the images from which the geometric position information of the hand and finger movements may be extracted. In order to extract the geometric position information, a 2D camera or a 3D camera may be utilized. In another implementation, the depth perception unit 410 may be utilized by the gesture recognition unit 408 to acquire hand and fingers movement in the 3-D digital format from the VR. The depth perception unit 410 may include a depth and motion sensing device to track hands and finger movements in the 3D format.

The geometric position information of the hands and finger movements in the VR, as extracted is also referred to as feature points in the present disclosure. The feature points for a particular gesture are mapped to the gesture and the mapped information is stored for subsequent use in the gesture database. The feature points may include, for example, fingertip positions or coordinates of finger positions, for example, the center of the palm, tips of thumb, index finger, middle finger, ring finger, for each hand, the distance between the fingertip positions, etc. The distance between the finger tips positions, also referred to as feature vector may be calculated using Euclidean distance method. Utilizing the 3-D acquisition information stored in the gesture database and the images captured by the imaging unit 403, the gesture recognition unit 408 may apply machine learning and/or artificial intelligence to identify the same gesture when performed again in the VR.

In accordance with an embodiment of the present disclosure, the gesture recognition unit 408 may also involve sensing techniques to detect position and/or movements of the gesture performed in the VR, for example, the position and movements of the hands or fingers in the VR.

In one example, the sensing technique is a marker based technique. A marker may be worn on the finger or hand by the user of the VR device 401 and accordingly the movement of the hands may be tracked by the marker. Thus, the gesture recognition unit 408 is able to recognize the gestures based on the movements tracked by the marker as worn on the finger, or hand, of the user.

In another example, the sensing technique is a vision based technique. Vision based techniques may use the imaging unit 403 to collect the gesture image sequence, process and analyse the images. Based on the images as processed and analysed, the gestures may be detected. In this approach, the actual hand of the user may be used to directly provide inputs to the VR device 401. Thus, a user can control the multimedia content corresponding to the connected devices 216 displayed in the VR, by making gestures with the use of hand.

In another, VR enabled gloves may be worn by the user to interact with the VR device 401. Using gloves, user can interact with multimedia contents corresponding to the connected device 216 using different hand gestures. In one such example, the gloves may measure finger extension through a series of fiber-optic cables. Light passes through the cables from an emitter (not shown) to a sensor (not shown). The amount of light passed to the sensor depends upon user's hand position, for example, if palm is open, more light will pass to the sensor and if palm is closed, less light will pass to the sensor. The sensor in turns passes the data to VR device 401. The gesture recognizing unit 408 interprets the data and detects the hand gestures.

In yet another example, the sensing technique is a depth based technique. Depth based gesture recognition uses depth sensors as explained above in relation to the depth perception unit 410. These sensors may employ various hand gestures cognition approaches and applications using depth cameras, or cameras enabled with depth functionality.

By way of an example, the gestures as successfully recognized by the gesture recognizing unit 408 may be classified into a type of gesture-input as disclosed above (for example, Type-1, Type-2, Type 3, Type-4, etc.)

By way of an example, the gestures-inputs to communicate with the multimedia contents of the connected devices 216, may include, for example, a grab and hold gesture, point gesture, press gesture, and pinch and zoom gesture. Some of these gesture-inputs are discussed in detail below:
Grab/Hold Gesture: Using this gesture, the user can manipulate the multimedia contents corresponding to the connected devices in the VR. The user can use this gesture to: place the multimedia contents in the VR at any place of interest, rotate the multimedia contents, resize the multimedia contents and translate the model as depicted in a multimedia content. To perform the gesture, the user moves his hands in the VR and the graphical representation of the actuating means imitates the movement of users hand on the VR display 404. Accordingly, the multimedia content of the connected device 216 towards which the movement is detected, is translated and rotated according to user's hand movement. This gives the user the feeling that he is interacting with the actual connected device 216. Further, the user may move his hand in a desired direction to position the multimedia content in the VR. When the user has decided upon a position, he spreads his fingers wide to place the multimedia content at the decided position.

Point Gesture: In a further example, the point gesture may be used to provide control command to an updated multimedia content including the virtual actuator, as explained above. Such interaction with the multimedia contents of the connected devices 216 gives the user a real feeling of interacting with the actual connected devices 216. In one such example, when a user is in front of a multimedia content, which may be 3D replica model of the connected device 216, and raises his hand with his palm closed and index finger pointing straight forward towards a the virtual actuator of the updated multimedia content, such as a button/display panel/touch panel on the 3D model, a point gesture is detected by the gesture recognizing unit 408. The corresponding button/display panel/touch panel on the 3D model is highlighted and its functionality is displayed on user's VR display. User can then select whether it wants to operate with that button /display/touch panel or not. Further, if the user wants to operate any button /display/touch panel on the real connected device 216, he may perform a press gesture on its 3D model in a virtual scene.

Press Gesture: If a user wants to operate any actuator (button /display/touch panel) on the connected device 216 present in the real world environment 217, he performs a press gesture in the VR in relation to the virtual actuator. Press gesture is an extension of point gesture. If with point gesture detected by the gesture recognition unit 408, the coordinates of the graphical representation of the actuating means and those of the virtual actuator (icon such as virtual button/virtual display/virtual touch panel) matches in the VR, then the press gesture is detected.

Pinch and Zoom Gesture: If the user wants to have a better view of the multimedia content, he may scale up and down the virtual model, i.e., the multimedia content, in as displayed in the VR using this type of hand gesture. For scaling up, user has to make a pinch gesture by making thumb and index finger close to each other followed by zoom in gesture by spreading out thumb and index finger. For scaling down the virtual model, user has to narrow the space between thumb and index finger by moving them close to each other. User can scale a particular part like any of the virtual actuators (icon such as virtual button/virtual display panel etc.) of the virtual model for having a better view of that part. The pre-requisite for this is the coordinates of the graphical representation of the actuating means should match with the coordinates of that part of virtual model. Now with coordinates matched and pinch to zoom gesture performed by user, the VR device 401 may display on the VR enabled display 404 an enhanced view of that part so that user can interact with it better.

By way of an example, the gestures-inputs to position or control the graphical representation of the actuating means in the VR may include, for example, forward movement, backward movement, left and right movement, turn left/right gesture, stop gesture, speed, and size and resolution control gestures. Some of these gesture-inputs are discussed in detail below:

Forward Movement: If the user wishes to move the graphical representation of the actuating means forward in the VR towards a particular multimedia content if he is at a distance from that multimedia content as represented in the VR space, then the user raises his hand in front of his face with palm direction straight ahead. The gesture recognition unit 408 may sense such gesture and accordingly, the graphical representation of the actuating means may move forward in the VR, as displayed in the VR enabled display 404.

Backward Movement: If the user wishes to move the graphical representation of the actuating means backward in the VR if he has gone to near a multimedia content, as represented in the VR and wants to go back some distance, then the user turns his hands palm direction by flipping his palm pointing back to the user. The gesture recognition unit 408 may sense such gesture and accordingly, the graphical representation of the actuating means may move backwards in the VR, as displayed in the VR enabled display 404.

Left and Right Movement: If the user wishes to move the graphical representation of the actuating means to left side keeping the virtual avatar (i.e., the graphical representation of the actuating means includes a virtual avatar) as displayed on the VR enabled display 404 looking forward in the VR, he will wave his hands leftwards with palm open. Similarly, for moving right side, he will wave his hands rightwards. The gesture recognition unit 408 may sense such type gesture and accordingly, the graphical representation of the actuating means may move left or right in the VR, as displayed in the VR enabled display 404.

Turn Left/Right Position: If the user wishes to go towards left in the VR, then the virtual avatar has to change its viewing direction to the left side view. In order to change the viewing direction of the virtual avatar, the user may move his head to left side. The gesture recognition unit 408 may sense the head left-turning gesture and accordingly, the graphical representation of the actuating means along with the virtual avatar may move towards the left direction in the VR. Similarly, in order to change the viewing direction of the virtual avatar in the right direction, the user may move his head to right side. The gesture recognition unit 408 may sense the head right-turning gesture and accordingly, the graphical representation of the actuating means along with the virtual avatar may move towards the right direction in the VR.

Stop Position: To stop the movement of the graphical representation of the actuating means, or the virtual avatar in the VR, the user may take his hand out of a pre-designated display area on the VR enabled display 404, where the graphical representation of the actuating means is only rendered on the pre-designated portion of the VR enabled display 404. If the gesture recognition unit 408 may detect no hand while the virtual avatar is present in the VR, the virtual avatar will be stopped immediately. The virtual avatar may be seen moving only after the graphical representation of the actuating means, i.e., the virtual hands, are rendered again on the pre-designated portion of the VR enabled display 404.

Speed Size and Resolution Control: The speed, size and resolution of the graphical representation of the actuating means may be changed according to user defined settings. This means that in the VR, the size of hand can be varied so as to control the far of connected devices 216. Also speed of the movement of the virtual hand and its resolution can be altered according to the user defined settings.

Eye-Hand Coordination: In this type of gesture-input, eye gaze tracking is performed by the gesture recognition unit 408 to identify the multimedia content in the VR towards which the user is looking in the VR. Further, for accurate gesture-analysis, it may also be checked if the user hand gesture is also aligned in the same direction as the gaze. This increases accuracy and reduces the error when user's gaze conflicts with his hand gestures.

The, gesture mapping unit 409 may receive the gestures thus detected by the gesture recognition unit 408 to map the gestures to the multimedia contents, corresponding to the connected devices 216, in the VR. In one example, the gesture mapping unit 409 may optionally receive an input from the depth perception unit 410 to estimate proximity of a gesture to a nearby multimedia content in the VR. Accordingly, the gesture is mapped to that nearby multimedia object in the VR, by the gesture mapping unit 409 in a gesture mapping table (not shown). The gesture mapping table may be same as the gesture-input database, as explained above, or may be a separate table (not shown in the FIG. 4B). As will be understood, the gesture mapping table may be stored in the memory 405, or may be coupled to the VR device 401. In another implementation the gesture mapping table may be stored on the VR server, as explained above.

After successful mapping, the gesture mapping unit 409 may provide the mapped information to the gesture analysing unit 411.

In accordance with an embodiment of the present disclosure, a particular gesture may be mapped to an updated multimedia content including the graphical representation of the actuator, i.e., the virtual actuator, in the gesture mapping table. Accordingly, the gesture mapping table may include all the gestures possible for interacting with a virtual actuator. By way of an example, the following Table 5 includes a list of updated multimedia content including the virtual actuators and the supported gestures to interact with the corresponding virtual actuator:

**[Table 5]**

| **Updated Multimedia content including actuator** | **Supported Gestures** |
|---|---|
| Button | Tap, Double Tap, Long Press |
| Knob | Clockwise/Anticlockwise rotation |
| Touch-Panel | Swiping/Sliding |

The gesture analysing unit 411 may receive an input of a detected gesture from the gesture recognizing unit 408, and an input from the gesture mapping table 409 which includes the mapped gestures for the respective multimedia contents and updated multimedia contents for the gestures as detected by the gesture recognizing unit 408. Accordingly, the gesture analysing unit 411 may refer to the gesture mapping table 409 and identify if any multimedia content and/or the updated multimedia content corresponding to a connected device 216, has a match to the detected gesture in the gesture mapping table 409. Further, if a mapped multimedia content and/or a mapped updated multimedia content for the detected gesture is identified by the gesture analysing unit 411, information regarding the same is sent to the control command generation module 414, in accordance with an embodiment of the present disclosure.

Referring to FIG. 4B, the VR management module 407 includes a control command generation module 414 adapted to generate a command based on a gesture-input received on the VR enabled input unit 402. The gesture-input as received may be identified by a gesture recognition unit 408 as explained in detail above. The corresponding gesture-input is translated into a corresponding command by the control command generation module 414 on identifying a match in the gesture-input database, as disclosed above.

In accordance with an embodiment of the present disclosure, if the gesture-input as received is a gesture command and a match is identified in the gesture mapping table 409 in relation to an updated multimedia content including the graphical representation of the actuator of a corresponding connected device 216, the control command generation module 414 may generate a control command in relation to the connected device 216 corresponding to the updated multimedia content. Further, referring to FIG. 4A the VR device 401 includes the output unit 406 that receives the control command thus generated by the control command generation module 414, and further provides the control command, thus generated, to the connected device 216 present at the real world environment 217. Examples of the output unit 404 includes, but not limited to, Wi-Fi module/ LAN port/Internet gateway.

In one embodiment, the control command comprises of virtual control instruction(s) to be executed at the connected device 216. In such case, the virtual control instructions may be reference codes to be translated at the connected device 216 present in the real world environment 217, and based on the translated codes, the corresponding operation is performed by the connected device 216.

In another embodiment, the control command comprises of actual control instructions that are executed at the connected device 216. As explained above, the actual control instructions are associated with the operation identified through the gesture mapping table 409, as explained above. Once received at the connected device 216 through the output unit 406, the operation is performed directly at the connected device 216.

In accordance with a further embodiment of the present disclosure, once the operation is performed at the connected device 216, the connected device 216 updates its status to the VR device 401 and accordingly the rendering unit 412 displays the multimedia content of the connected device 216 depicting an updated multimedia status, in the VR.

Referring to FIG. 4B, the rendering unit 412 is coupled to the VR enabled display 404 (referring to FIG. 4A) for displaying a multimedia content in the VR based on an input from the positioning unit 413. Further, the rendering unit 412 may display an updated multimedia content including a graphical representation of the actuating means in an operational relation with a graphical representation of at least one actuator corresponding to a respective connected device 216, in the VR. The graphical representation of the actuating means is rendered at a location in the VR which is derived from the gesture position information. The gesture position information may be obtained from the images as captured by the imaging unit 403.

The VR enabled display 404 as shown in FIG. 4A displays the VR (also referred to as a VR view or a VR environment in the present disclosure) in accordance with various embodiments of the present disclosure. In accordance with an embodiment of the present disclosure, the VR enabled display 404 displays multimedia contents corresponding to the connected devices 216 in the VR. In accordance with a further embodiment of the present disclosure, the VR enabled display 404 displays or renders, updated multimedia contents on receiving gesture position information in the VR space, the updated multimedia content including the graphical representation of the actuator(s), also referred to as the "virtual actuator(s) or icon(s)", corresponding to the connected device 216. The updated multimedia content may include whole of the multimedia content, or may include only a part of the multimedia content displaying a zoom-in view of the actuator.

In accordance with an embodiment of the present disclosure, the VR enabled display 404 displays a plurality of multimedia contents corresponding to a plurality of connected devices 216 in the VR. According to one aspect, the VR enabled display 404 may display an updated multimedia content of at least one connected device 216 selected amongst a plurality of connected devices 216. In one example, at least one multimedia content from the plurality of multimedia contents as displayed on the VR enabled display 404 may be selected. Accordingly, the updated multimedia content corresponding to the selected multimedia content is displayed. According to another aspect, the VR enabled display 404 may display a plurality of updated multimedia contents, each including virtual actuators corresponding to the respective connected devices 216.

According to an embodiment of the present disclosure, the multimedia contents may be placed in the VR based on pre-stored coordinates of the multimedia content in the VR. The pre-stored coordinates may be available from the placement database 220 (as shown in FIG. 2B), which may be stored in the memory 405. Alternately, the pre-stored coordinates may be available from the VR server as disclosed above. According to another embodiment of the present disclosure, a positioning unit 413 may be optionally used to correctly place the multimedia content in the VR, or place the multimedia content in a desired location in the VR. Further, the positioning unit 413 may refer to the information stored in the placement database 220 (as shown in FIG. 2B) to identify the relevant multimedia content matching the parameters of the VR as obtained by the positioning unit 413. The parameters may be obtained by the positioning unit 413 from the imaging unit 403. In one example, the VR is a 3D view having a 3D coordinate system. The positioning unit 413 obtains parameters of the current VR view as captured and analysed by the imaging unit 403, for example, the 3D coordinates of the VR, or the 3D coordinates of the objects already present in the VR. Further, if any of the obtained parameters have a matching to a multimedia content corresponding to a connected device 216 in the placement database 220, that multimedia content is positioned by the positioning unit 413 at the designated 3D coordinates of the multimedia content.

FIGS. 5A and 5B illustrate various components of an electronic device 501 that provides AR so as to provide control command to at least one connected device 216 (not shown in FIG. 5A and 5B) in AR, in accordance with an embodiment of the present disclosure. The electronic device 501 operating in the respective AR mode shall be hereinafter referred to as an AR device 501. The AR device 501 may form, for example, the whole or part of the electronic device 300 as shown in FIG. 3, electronic device 201 as shown in FIG. 2A.

In accordance with one embodiment, the electronic device 300 (as shown in FIG. 3) may be set to act as a VR device 401, or may be set to act as an AR device 501. In accordance with another embodiment, the electronic device 300 may act only as a VR device 401. In accordance with another embodiment, the AR device 501 may act only as an AR device 501.

The AR device 501 as illustrated in FIG. 5A may include at least some components that may function similar to those included in the VR device 401 as shown in FIG. 5B. The details of such components may not be explained again for the sake of brevity.

In accordance with an embodiment of the present disclosure, the AR device 501 provides an AR by detecting parameters from the surrounding view of the AR device 501, for example, an object in the reality of the user or prominent features of the surrounding view of the AR device 501. Further, the AR device 501 may render a particular multimedia content corresponding to a connected device 216, at a desired position in the AR based on the detected parameters. Further, the AR device 501 includes an imaging unit 503 that captures and processes an image of a real scene in the AR to detect the parameters. Based on the detected parameters, one or more multimedia contents having a match to the detected parameters in the placement database 220 (not shown in FIGS. 5 A and 5B) are identified. Further, a positioning unit 513 as shown in FIG. 5B may be optionally used to position the identified multimedia content at the exact position in the AR, as desired, or as available from the placement information stored in the placement database 220. It should be understood that the placement database 220 may reside on an external server (for example the server 214 as shown in FIG. 2A) which may also be referred to as an AR server in the present disclosure. Further, the AR server may include the detailed feature information from each possible scene that may be viewable on the AR device 501 and the multimedia contents of the connected devices 216 mapped to the extracted features. The AR device 501 may accordingly provide its position information to the AR server and may in-response receive the multimedia contents to be placed in the reality of the user of the AR device 501 based on scene understanding and features extracted from the scene.

Referring to FIG. 5A, the AR device 501 at least includes an AR enabled input unit 502, an imaging unit 503, an AR enabled display 504 (for example, the display 206 as shown in FIG. 2A), a memory unit 505(for example, the memory unit 204), an output unit 506, an AR management module 507, an optional motion sensor unit 520 (shown by dotted lines) and an optional GPS unit 530(shown by dotted lines). The GPS unit 530 may be the same as GPS module 327 as shown in FIG. 3. The AR management module 507 may be the management module 208 of the electronic device 201. Referring to FIG. 5B, the AR management module 507 includes a gesture recognizing unit 508, a gesture mapping unit 509, a gesture analysing unit 511, a rendering unit 512, and a control command generation module 514. In one embodiment, the AR management module 507 may optionally also include a depth perception unit 510 (shown by dotted lines in the FIG. 5B to indicate an optional presence of the depth perception unit 510). In one embodiment, the AR management module 507 may also include a positioning unit 513 (shown by dotted lines in the FIG. 5B to indicate an optional presence of the positioning unit 513). It should be understood that in some embodiments, the one or more components as explained herein may form part of a single component. The foregoing description shall now explain the various operations of the components of the AR device 501 in conjunction with FIGS. 5A and 5B. Reference shall be made to FIG. 5B for explaining various functioning of the AR management module 507.

Referring to FIG. 5A, an AR enabled input unit 502 is integrated with the AR device 501. In another implementation, the AR enabled input unit 502 may be communicatively coupled with the AR device 501. The AR enabled input unit 502 may function similar to the VR enabled input unit 402 to receive a user-input in the form of hand or finger gestures performed using the actuating means as disclosed above, in the AR space, and various other gesture forms which may include for example, swipe, touch such as pattern and voice recognition gestures, voice control or a cursor direction key, eye-gaze etc. In order to process and analyse the gestures, the gesture movements as performed may be captured in the form of images by the imaging unit 503 which may also function similar to the imaging unit 403 as shown in FIG. 4A. Accordingly the AR management module 507 is enabled to perform one or more functions on the AR device 501. Examples of the AR enabled input unit 502 may include, but not limited to, actuating means as explained above, smart gloves, joystick, smart stylus, smart touch interface, eye gaze tracking input device, and voice input device.

In accordance with an embodiment of the present disclosure, the AR enabled input unit 502 may receive input in the form of a gesture performed using an actuating means in the space when wearing/using the AR device 501, where the gesture movements are captured in the form of images by the imaging unit 403. The term "space" herein refers to a space in the AR provided by the AR device 501, and may accordingly be also referred to as an 'AR space'. Further, as also explained above, a graphical representation of the corresponding actuating means in the AR space is also rendered on the AR enabled display 404, where the graphical representation of the corresponding actuating means may be seen in the AR space virtually imitating the gestures as performed by the user in the AR space, using the actuating means. Similar to the gesture-inputs as received on the VR device 401 (FIG. 4A), gesture-inputs may also be received on the AR enabled input unit 502 to provide a command for controlling a connected device 216. The gesture-input database as disclosed above may also be used by the AR device 501 to detect a gesture performed in the AR.

The gesture-input database may be present on the AR device 501, for example in the memory 505, or may be coupled to the AR device 501. In one embodiment the gesture-input database may be present on the AR server including details of the connected devices 216 along with the details of their corresponding multimedia contents. The details of the multimedia contents may include at least the positioning coordinates of the multimedia contents in the AR and details of the graphical representation of the actuator to be displayed in the AR.

The imaging unit 503, similar to the functioning of the imaging unit 403(shown in FIG. 4A), captures the images in the AR where the images may include the various instances of the gesture movements as performed by a user in the AR when using/wearing the AR device 501. Likewise, the imaging unit 503 may include either a single camera, or a dual camera or may even perform in assistance with an optional depth perception unit 510 similar to the optional depth perception unit 410 explained with reference to FIGS. 4A and 4B. Further, the imaging unit 503 may also identify position of the actuating means in the AR space at the time of performing the gesture, also referred to as the gesture-position information in the present disclosure. The images as captured by the imaging unit 503 is provided to the gesture recognition unit 508 which may analyse the images to recognize common gestures such as press, swiping, tapping, sliding etc.

The gesture recognition unit 508 may also function similar to the gesture recognition unit 408, as explained with reference to FIG. 4B above, and may utilize one or more techniques, as described above to detect the intended gesture from the images as captured by the imaging unit 503 in the AR. The gesture recognition unit 508 may also apply artificial intelligence/machine learning to recognize the gestures. Also, the AR device 501 is trained for the first time to store a gesture in the gesture database (explained with reference to FIG. 4A and FIG. 4B). As will be understood, the gesture database may be stored in the memory 505, or may be coupled to the AR device 501. In another implementation the gesture database may be stored on the AR server.

Similar gestures as performed in the VR may also be performed in the AR to interact with the multimedia contents and the updated multimedia contents in the AR. For the sake of brevity, the various types of gestures as explained above are not repeated for the sake of brevity.

The gesture mapping unit 509 may receive the gestures thus detected by the gesture recognition unit 508 to map the gestures to the multimedia contents, corresponding to the connected devices 216, in the AR. The gesture mapping unit may perform similar function to the gesture mapping unit 409 (described with reference to FIG. 4B) to map the multimedia contents as well as the updated multimedia contents, including the graphical representation of the actuator(s), of a corresponding connected device 216. Further, the gesture mapping unit 509 may also optionally receive an input from the depth perception unit 510 to estimate proximity of a gesture to a nearby multimedia content in the AR. Accordingly, the gesture is mapped to that nearby multimedia object in the AR, by the gesture mapping unit 509 in a gesture mapping table (same as the gesture mapping table described with reference to FIG. 4B). As will be understood, the gesture mapping table used herein may be stored in the memory 505, or may be coupled to the AR device 501. In another implementation the gesture mapping table may be stored on the AR server, as explained above.

After successful mapping, the gesture mapping unit 509 may provide the mapped information to the gesture analysing unit 511. The gesture analysing unit 511 also functions similar to the gesture analysing unit 411 (as described with reference to FIG. 4B), to provide an output to the control command generation module 514. The control command generation module 514 functions similar to the control command generation module 414 and translates a corresponding gesture-input to a corresponding command. Further, in case of a gesture-command is detected by the gesture recognitions unit 508 and a match of the gesture is identified in the gesture mapping table, in relation to an updated multimedia content including the graphical representation of the actuator of a corresponding connected device 216, the control command generation module 514 may generate a control command in relation to the connected device 216 corresponding to the updated multimedia content. Further the control command, thus generated, is provided to the connected device 216 present at the real world environment 217 via the output unit 506. Further, the rendering unit 512 may also function the same as the rendering unit 412(explained with reference to FIG. 4B) and accordingly may display an updated multimedia content including a graphical representation of the actuating means in an operational relation with a graphical representation of at least one actuator corresponding to a respective connected device 216, in the AR. The graphical representation of the actuating means is rendered at a location in the AR which is derived from the gesture position information. The gesture position information may be obtained from the images as captured by the imaging unit 503.

The rendering unit 512 may optionally receive inputs from the positioning unit 513 to render the multimedia contents in the AR at the desired position on the AR enabled display 504 based on the received inputs from the positioning unit 513. Further, the rendering unit 512 may display an updated multimedia content including graphical representation of at least one actuator corresponding to a respective connected device 216, in the AR. According to an embodiment of the present disclosure, the updated multimedia content is displayed on the AR enabled display 504 based on gesture position information of the actuating means. The gesture position information may be obtained from the images as captured by the imaging unit 503.

The AR display 504 as shown in FIG. 5A displays an AR (also referred to as an AR view or an AR environment in the present disclosure) in accordance with various embodiments of the present disclosure. In one example, the AR may include a real scene or a preview image, for example, a background landscape, being viewed through the imaging unit 503. In some cases, the real scene is an entire view, and in other cases, the real scene is a portion of the entire view. Further, the real scene may include objects which may exist or is a part of the real scene. In another example, the AR is a live-feed of an environment not surrounding the AR device 501. By way of an example, the live-feed of an environment may be a real time image of an environment that is remotely located in relation to the AR device 501.

In accordance with an embodiment of the present disclosure, the AR enabled display 504 displays multimedia contents and updated multimedia contents corresponding to the connected devices 216 in the AR, similar to the VR enabled display 404. The updated multimedia content includes the graphical representation of the actuating means of the AR device 501.

As explained before, the imaging unit 503 may process an image that enable detection of one or more parameters from the AR as displayed, for example, a real scene, to position a multimedia content at a desired location in the AR. The parameters, for example, may include marker-based, location-based AR parameters such as boundary of a particular region identified by the imaging unit 503, position and orientation of one or more physical objects present in the AR, point of interests or features detected from the objects in the AR, location coordinates, etc.

An optional motion sensor unit 520 may be included in the AR device 501 which may be used when a gesture-input in relation to placing (also referred to as the placement command) may be detected by the gesture recognition unit 508. For example, the motion sensor unit 520 may produce a sensed signal when the multimedia contents are to be placed in the AR for the first time. Information extracted from the sensed signal for a particular multimedia content may also be stored in the placement database 220 along with the detected parameters of the AR environment. Subsequently, when the same signal is re-sensed in AR environment, the positioning unit 513 may identify a match in the placement database 220, and enable positioning of that multimedia content corresponding to the sensed signal.

The motion sensor unit 520 may include information on motion of the AR device 501, for example, a motion direction of the device 501, a motion distance, a motion speed and the like. Motion direction can be detected, e.g., as either a front, back, left, right, up and down direction. Other reference directions can also be pre-established and detectable. Accordingly, the motion sensor unit 520 may include one or more of various sensors which can detect the various possible motions of the device 501, such as the geomagnetic sensor, an acceleration sensor (for example, acceleration sensor 340E as shown in FIG. 3), a gyro sensor (for example, gyro sensor 340B as shown in FIG. 3) and the like. The motion sensor unit 520 may be automatically activated when the placement of the multimedia contents in the AR is activated on the AR device 501.

An optional GPS module 530 may be used to obtain current position information of the AR device 501 at the time of placement of the multimedia contents in the AR. The current position information as obtained at the time of placement of a multimedia content in the AR is stored as a position information in the placement database 220 for that particular multimedia content. Subsequently, the positioning unit 513 may obtain the current position information of the AR device 501, and if a match is identified between the current position information and the position information stored in the placement database 220, then that multimedia content is rendered in the current AR of the AR device 501.

The positioning unit 513 may obtain the current position information from the GPS module 530 and a surrounding image of the AR device 501 as captured and processed by the imaging unit 503. Based on the current position of the AR device 501, the positioning unit 513 identifies a match in the placement database 220 and accordingly identifies a relevant multimedia content to be placed in the vicinity of the AR device 501. Further, the positioning unit 513 may utilize one or more techniques described in the foregoing description to extract relevant information from the surrounding image, to position the identified multimedia content at a desired location in the AR.

According to some of the embodiments of the present disclosure, the positioning unit 513 may include location-based and vision based position systems which enable detecting the one or more parameters of the AR view being captured and processed by the imaging unit 503. The positioning unit 513 may include, for example, image processing techniques, markers and indoor positioning system (IPS).

In one example, the positioning unit 513 may apply an image processing technique to detect parameters of the AR that includes a real scene being previewed by the imaging unit 503. The detected parameters using image processing technique may include object (for example, the physical objects present in the real scene) detection techniques, feature-extraction and techniques including corner detection and/or edge detection, triangulation technique, and other image processing techniques. Also, coordinates (also referred to as a boundary) may be identified of the physical objects in the real scene. Based on these detected parameters, the multimedia content is rendered in the AR, for example, the multimedia content is rendered at a position of the physical object in the real scene, or proximate to the position of the physical object in the real scene.

By way of a specific example, when a multimedia content corresponding to a connected device 216 is generated, or is placed for the first time in the real scene, image processing techniques are applied to obtain various parameters of the AR in relation to the placed multimedia content in the AR. For example, a placement command by way of a gesture is received on the AR device 501 to place a multimedia content in the real scene being previewed on the AR device 501. The AR management module 507 receives such placement command and accordingly places the multimedia content at a desired location in the AR. The gesture recognizing unit 508 and the gesture analysing unit 511 may be referred to for interpreting the gesture in relation to placing the multimedia content. Once placed, the 360 degree view of the AR including the placed multimedia content is captured by the imaging unit 503, and the details/parameters of the 360 degree AR view are stored in the placement database 220, for subsequent use. Subsequently, when the positioning unit 513 applies image processing technique in the same real scene, and identifies parameters having a match in the placement database 220, the multimedia content in respect of the matched parameters are rendered in the AR. The same real scene may be detected based on the current position obtained from the GPS module 530.

In another example, the positioning unit 513 uses markers placed in the real scene and based on the position of these markers, a desired multimedia content is placed in the AR. For example, the markers may be placed in a desired location in the real scene where the user desires to view a particular multimedia content of a connected device 216. The positioning system 513 may refer to an image as processed by the imaging unit 503 to identify a marker-based region and accordingly renders that multimedia content in that marker-based region in the AR. The markers may include a unique pattern, for example, a quick response (QR) code or an arbitrary black/white square pattern. The unique patterns are used to differentiate the markers in a particular environment. Such patterns may be enabled with sufficient information to track and locate a pattern along with its orientation in the AR environment. In a further example, the markers used can belong to one of the technologies including, but not limited to, a radio device which can emit all its information using radio signal, or a Bluetooth device which can emit all its information using Bluetooth technology. In another example, a paper in which Unique Device ID is written may also be used. The Unique Device ID can be extracted from the paper using an image processing technique.

In another example, three or more markers may be used to obtain three-dimensional position and orientation of the markers with respect to the objects present in the real scene. Accordingly, a multimedia content is displayed in the AR based on the obtained results of the three-dimensional position and orientation of the markers.

In yet another example, the positioning unit 513 uses Indoor Positioning System (IPS) to place a multimedia content in the real scene being previewed on the AR enabled display 504. If the AR device 501 is detected to be in an indoor space by the positioning unit 513, then the IPS will find the exact spatial coordinates of the AR device 501. Further, the motion sensor unit 520 may also be used in conjunction with the positioning unit 513 to detect the motion direction of the AR device 501. The IPS enables identifying exact spatial coordinates of an image being captured and processed by the imaging unit 503. If the spatial coordinates coincide with the 360 degree parameters stored in the placement database 220, then the corresponding multimedia content of the connected device 216 is placed at that exact spatial position in the AR, by the positioning unit 513. The IPS technologies may include, but are not limited to: Magnetic positioning, Inertial measurements, Wi-Fi-based positioning system (WPS), Bluetooth, Choke point concepts, Grid concepts, Long range sensor concepts, Angle of arrival, Time of arrival, and Received signal strength indication.

Based on one or more techniques disclosed above, and the GPS location of the AR device 501, the positioning unit 513 is able to accurately place the multimedia content corresponding to a connected device 216 in the AR as viewed on the AR enabled display 504.

Each of components of the VR device 401 as well as the AR device 501 described above according to the present disclosure may include one or more components, and each component's name may vary according to the type of the device. The respective device may include at least one of the above-described components, and some may be omitted or additional components may be included. In addition, some of the components of the hardware according to the present disclosure may be combined into a single component and perform functions identical to those of the respective components before their combination. Similarly, some of the components of the hardware according to the present disclosure may be split into a plurality of entities that collectively perform functions identical to those of the respective component before their split.

The term "module", or "unit", as used herein may include its ordinary meaning including, but not limited to, for example, a unit of one, or a combination of two or more, hardware, software or firmware. The term "module" may be used interchangeably with a term such as unit, logic, logical block, component, or circuit. A module may be the smallest unit for performing one or more functions, or a portion thereof. A module may be implemented mechanically or electronically. For example, a module according to the present disclosure may include at least one of a known or to-be-developed application-specific integrated circuit (ASIC) chip, field-programmable gate array (FPGA) or programmable logic device that perform certain operations.

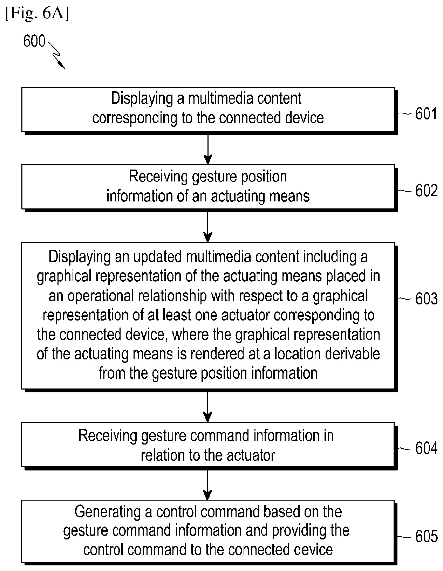

FIG. 6 A to FIG. 6C illustrate a method 600 of providing control command to at least one connected device 216 in accordance with an embodiment of the present disclosure. According to various embodiments of the present disclosure, the method 600 may be implemented on any of the VR device 401 and the AR device 501, as disclosed with respect to FIG. 4A to FIG. 5B.

Referring to FIG. 6A, a method 600 of providing control command to a connected device 216 is disclosed in accordance with a first embodiment of the present disclosure. According to the present embodiment, the method 600 includes at step 601, displaying, on the respective AR/VR device, multimedia content corresponding to a connected device 216. As described above, the multimedia content may be displayed in the respective AR or VR device at a desired position in accordance with the teachings of the positioning unit and the rendering unit, disclosed above with reference to FIGS. 4B and 5B. In one embodiment, the multimedia content may be displayed in the respective AR or VR at a desired position in accordance with pre-stored positioning information of the multimedia content on a respective AR server or VR server, as explained above, which may apply scene understanding and feature-extraction methods from the pre-stored scenes. Further, the multimedia content as displayed may depict an updated status of the connected device 216. In one example, the multimedia content as displayed maybe a full-view of the connected device 216. In another example, the multimedia content as displayed may be a partial-view of the connected device 216, for example, a particular zoomed-in portion of the connected device 216.

Further, the method 600 includes at step 602 receiving, by the respective AR/VR device gesture position information of the actuating means of the device. The actuating means may include at least one of a body part or a tool, as explained in detail above. In one example, the actuating means includes actual hands of the user of the device. The actual hand gesture and position of the hand gesture in the respective AR space/VR space, is detected by the gesture recognizing unit, as explained above with references to FIGS. 4B and 5B.

Further, the method 600 includes at step 603, displaying, on the respective AR/VR device, an updated multimedia content including the graphical representation of at least one actuator (i.e., the virtual actuator) corresponding to the connected device 216. Further, in accordance with an embodiment of the present disclosure, the updated multimedia content may include the graphical representation of the actuating means in an operational relationship with a graphical representation of the actuator, i.e., the virtual actuator. According to an aspect of the present disclosure, the updated multimedia content may include a partial-view of the connected device 216 including only the virtual actuator. For example, the updated multimedia content as displayed includes a zoomed-in portion of the virtual actuator of the connected device 216 in order to enable the user interacts with the virtual actuator. According to an aspect of the present disclosure, the updated multimedia content may include a whole-view of the connected device 216 including the virtual actuator as a highlighted portion. The updated multimedia content may be displayed in the respective AR/VR space on receiving the gesture position information at step 602. As explained above, the gestures mapping unit (referring to FIGS. 4B and 5B), maps the gestures to a corresponding multimedia content to be rendered in the respective AR/VR, in the gesture mapping table. The gesture mapping table may also include the corresponding gesture position information in the respective AR/VR space. Accordingly, upon receiving the gesture position information, the relevant updated multimedia content may be identified from the gesture mapping table. The updated multimedia content as identified is then rendered on the respective AR/VR. In one example, the graphical representation of the actuating means within the updated multimedia content may be rendered at a location derivable from the gesture position information as detected in the respective AR/VR space.

Further, the method 600 includes at step 604, receiving, by the respective AR/VR device, gesture command information in relation to the actuator. In accordance with an embodiment of the present disclosure, the control command is based on a correlation between the gesture command information and the actuator. By way of an example, the user may interact with the virtual actuator, such as buttons, control panels, knobs by means of gestures such as press, turn, slide etc. As explained above, the gestures are mapped in the gesture mapping table to a corresponding operation to be performed in the respective AR/VR. One such operation includes providing a control command to a connected device 216 corresponding to the multimedia content in relation to which the gesture has been performed. The gesture analyzing unit (referring to FIGS. 4B and 5B) in conjunction with various other modules, for example, the depth-perception unit, the imaging unit etc., analyzes the gestures to identify a match to a gesture command information in the gesture mapping table. In accordance with an embodiment of the present disclosure, the step 604 may include receiving by the AR/VR device, an intermediate gesture-input to position the graphical representation of the actuating means close to the graphical representation of the desired actuator before processing the gesture command information.

Further, the method 600 includes at step 605, generating a control command based on the gesture command information and providing the control command to the connected device 216. The control command is at least based on a correlation between the gesture command information and the actuator. For example, if a gesture-input in relation to controlling an actuator is captured and analyzed and a corresponding gesture-command is detected, then only a corresponding control command is generated for the corresponding connected device 216. In this example, if a match is identified between the analyzed gesture and a gesture command information in the gesture mapping table, then the gesture is converted to a corresponding control command which is then provided to the connected device 216 over the network 215 (as shown in FIG. 2).

In accordance with an embodiment of the present disclosure, the control command provided to the connected device 216 may include an instruction to update the status of the connected device 216. In accordance with a further embodiment of the present disclosure, the method 600 may include receiving an acknowledgement from the connected device 216 once the status of the connected device 216 has been updated. In accordance with a further embodiment of the present disclosure, the method 600 may include updating the display of the multimedia content to depict an updated status of the connected device 216.

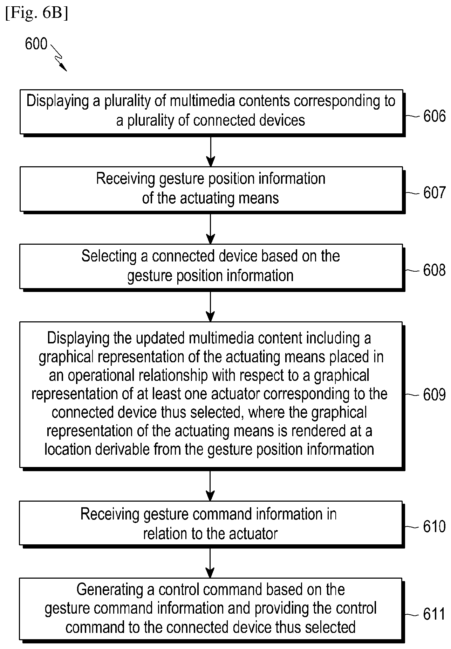

Referring to FIG. 6B, a method 600 of providing control command to a connected device 216 is disclosed, in accordance with a second embodiment of the present disclosure. The method 600 includes at step 606 displaying, on the respective AR/VR device, a plurality of multimedia contents corresponding to a plurality of connected devices 216. In accordance with a further embodiment of the present disclosure, the plurality of connected devices 216 may be from a single environment, for example a living room of the home environment. In accordance with another embodiment, the plurality of connected devices 216 may be from two or more physically separated environments, for example, from a living room of the home environment, from a kitchen of the home environment, or from an office environment.

Further, the method 600 includes at step 607, receiving, on the respective AR/VR device, gesture position information of the actuating means.

Further, the method 600 includes at step 608, selecting a connected device 216 based on the gesture position information. The selection may be of one of the plurality of multimedia contents of the connected devices 216, as displayed during step 606.

Further, the method 600 includes at step 609, displaying, on the respective AR/VR device, the updated multimedia content including a graphical representation of the actuating means in an operational relationship with a graphical representation of at least one actuator corresponding to the connected device 216 thus selected.

Further, the method 600 includes at step 610, receiving, by the AR/VR device, gesture command information in relation to the actuator. In accordance with an embodiment of the present disclosure, the step 610 may include receiving by the AR/VR device, an intermediate gesture-input to position the graphical representation of the actuating means close to the graphical representation of the desired actuator before processing the gesture command information.

Further, the method 600 includes at step 611, generating a control command based on the gesture command information and providing the control command to the connected device 216 thus selected.

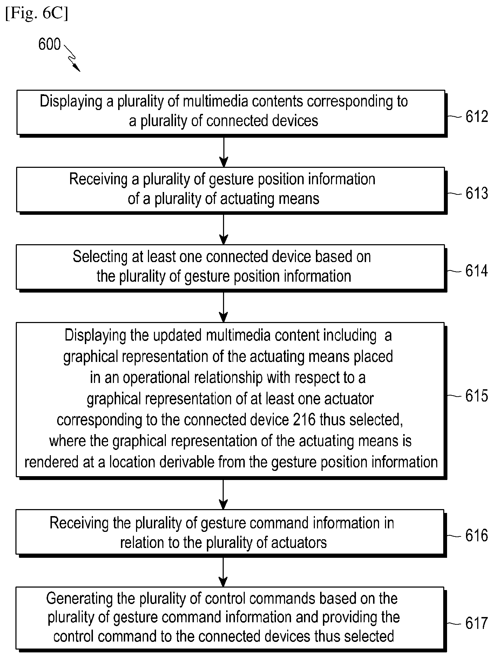

Referring to FIG. 6C, a method 600 of providing control command to a plurality of connected devices 216 is disclosed, in accordance with a third embodiment of the present disclosure. The method 600 includes at step 612, displaying, on the respective AR/VR device, a plurality of multimedia contents corresponding to a plurality of connected devices 216.

Further, the method 600 includes at step 613, receiving, on the respective AR/VR device, a plurality of gesture position information of plurality of actuating means. By way of an example, a plurality of virtual hands, or a plurality of virtual avatars of the users may be displayed on the display of the respective AR/VR device. Accordingly, gesture position information from the plurality of virtual hands or virtual actuators may be received. This example may a training scenario involving multiple users.

Further, the method 600 may include at step 614, selecting at least one connected device 216 based on the plurality of gesture position information. Further, the method may include at step 615, displaying, on the respective AR/VR device, plurality of updated multimedia contents, wherein each updated multimedia content includes a graphical representation of an actuating means in an operational relationship with respect to a graphical representation of a virtual actuator corresponding to the connected devices 216 thus selected at step 614. Further, the method may include at step 616, receiving, by the respective AR/VR device, plurality of gesture command information in relation to the plurality of virtual actuators. In accordance with an embodiment of the present disclosure, the step 616 may include receiving by the AR/VR device, an intermediate gesture-input to position the graphical representation of the actuating means close to the graphical representation of the desired actuator before processing the gesture command information.

Further, the method may include at step 617, generating plurality of control commands based on the plurality gesture command information, and providing the control command to the respective connected devices 216 thus selected.

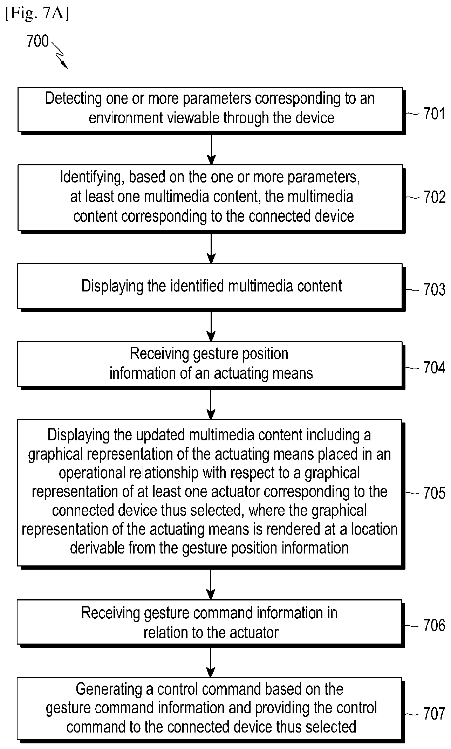

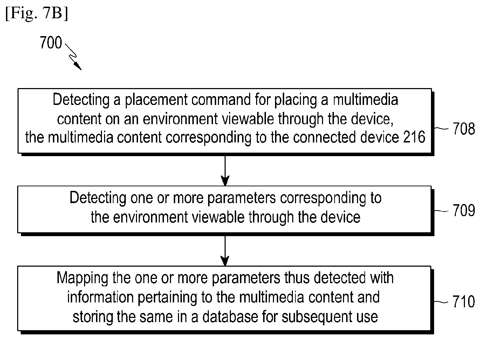

FIG. 7 illustrates a method 700 of providing control command to at least one connected device 216, in accordance with another embodiment of the present disclosure. According to various embodiments of the present disclosure, the method 700 may be implemented on any of the VR device 401 and the AR device 501, as disclosed with respect to FIG. 4A to FIG. 5B.

Referring to FIG. 7A, a method 700 of providing control command to a connected device 216 is disclosed, in accordance with an embodiment of the present disclosure. According to the present embodiment, the method 700 may include at step 701, detecting one or more parameters corresponding to an environment viewable through the respective AR/VR device. As described above, the one or more parameters of the environment viewable through the respective AR/VR device are detected using one or more positioning systems in conjunction with other various other modules, for example, the GPS unit, the sensing modules, the imaging unit etc..

Further, the method 700 may include at step 702, identifying, based on the one or more parameters, at least one multimedia content, the multimedia content corresponding to the connected device 216. Once detected, the parameters are identified for a match with the stored placement information in the placement database 220. If a match is identified in the placement database 220, then the multimedia content for the matched placement information is identified from the placement database 220.

Further, the method 700 includes at step 703, displaying, on the respective AR/VR device, the identified multimedia content. According to the present embodiment, the identified multimedia content may rendered in a position in the VR view, or the AR view, as detected by the positioning unit (referring to FIGS. 4B and 5B).

Further, the method 700 includes at step 704, receiving, by the respective AR/VR device, gesture position information of an actuating means.

Further, the method 700 includes at step 705, displaying, on the respective AR/VR device, an updated multimedia content including a graphical representation of an actuating means in an operational relationship with respect to a graphical representation of at least one actuator corresponding to the connected device 216, wherein the graphical representation of the actuating means is rendered at a location derivable from the gesture position information.

Further, the method 700 includes at step 706, receiving, by the AR/VR device, gesture command information in relation to the actuator. In accordance with an embodiment of the present disclosure, the step 706 may include receiving by the AR/VR device, an intermediate gesture-input to position the graphical representation of the actuating means close to the graphical representation of the desired actuator before processing the gesture command information.

Further, the method 700 includes at step 707, generating a control command based on the gesture command information and providing the control command to the connected device 216 thus selected.

In accordance with an embodiment of the present disclosure, the placement information with respect to a multimedia content of a connected device 216 may be provided by way of a placement command. Referring to FIG. 7B, a method 700 of providing placement information with respect to a multimedia content of a connected device is disclosed, in accordance with one embodiment of the present disclosure.

As illustrated, the method 700 includes at step 708, detecting a placement command for placing a multimedia content on an environment viewable through the respective AR/VR device, the multimedia content corresponding to the connected device 216.

Further, the method 700 includes at step 709, detecting one or more parameters corresponding to the environment viewable through the respective AR/VR device.

Further, the method 700 includes at step 710, mapping the one or more parameters thus detected with information pertaining to the multimedia content and storing the same in a database for subsequent use. In accordance with one embodiment, the database may be the placement database 220, as explained above.

The foregoing description shall now illustrate various examples of implementing the present disclosure on a VR device 300. Some of the other embodiments of the present disclosure shall also become apparent through the following examples.

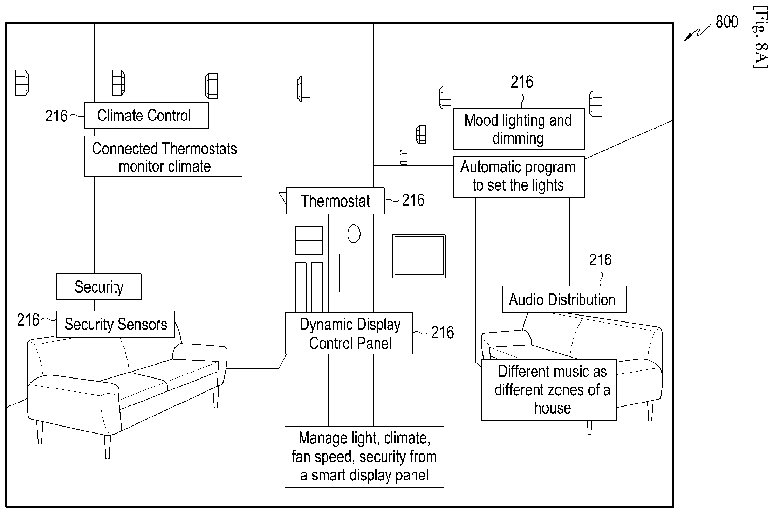

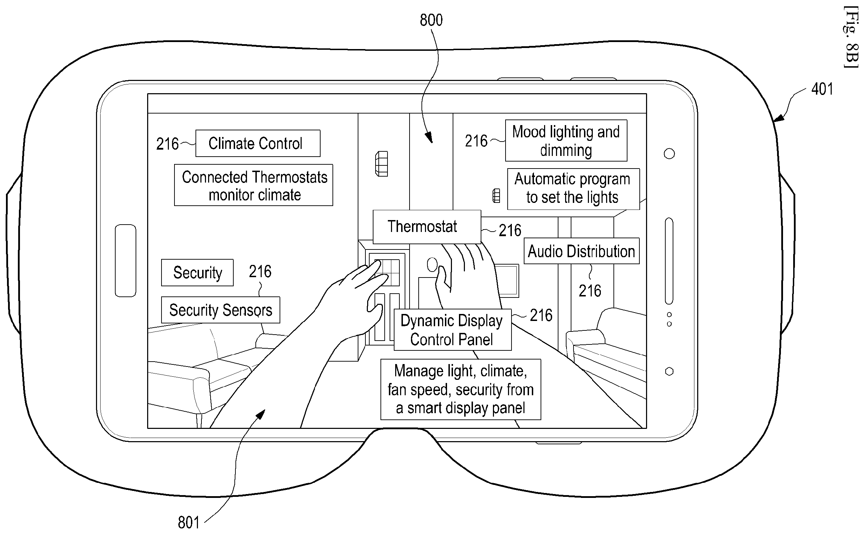

FIG. 8 illustrates an example of viewing connected devices 216 in a VR view 800, using, for example, the VR device 401, as explained above. As illustrated in the FIG. 8A, an example pre-recorded VR view 800 of a home environment is shown, which may include virtual replicas, i.e., the multimedia contents, of the connected devices 216, as depicted in the VR view 800. The virtual replicas as represented in FIG. 8A include a thermostat 216, a climate control unit 216, a dynamic display control panel 216, security sensors 216, an audio distribution panel 216 and mood lightning and dimming unit 216. Further, the VR view 800 also represents textual information for the operations to be performed using the virtual replicas in the VR view 800. Such textual information as represented in FIG. 8B include: 'connected thermostats manage climate' information for the connected device 216, 'climate control'. Further, information: 'manage light, climate, fan speed and security', is represented for the connected device 216, 'dynamic display control panel'.

Further, FIG. 8B illustrates, the pre-recorded VR view 800 being presented in a VR using, for example, the VR device 401, as explained above. Further, FIG. 8B also illustrates graphical representation of the actuating means 801, i.e., virtual replica of human hands, being rendered on the display of the VR device 401. Thus, the virtual replica of the hands can be seen in the VR view 800 interacting with the connected devices 216 in the VR view 800 in order to perform one or more gestures to control the real connected devices 216 present in the home environment.

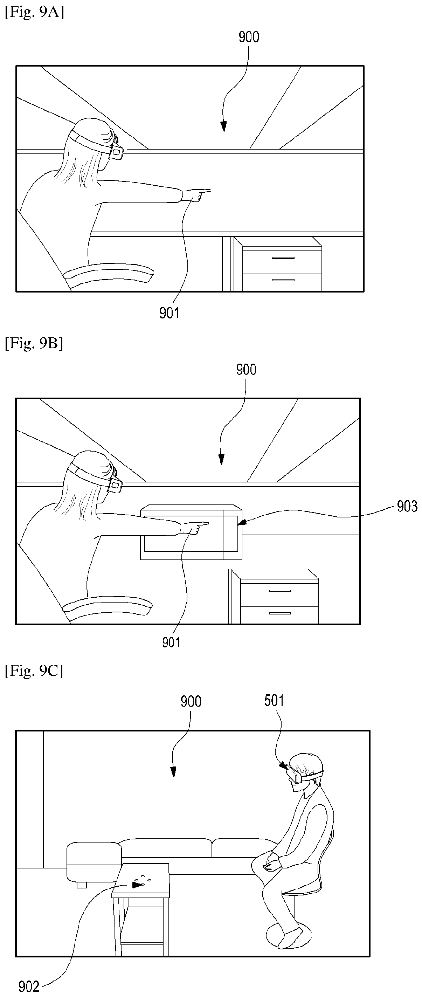

FIGS. 9A and 9B illustrate one example of viewing a connected device 216 in a reality of the user using, for example, when using or wearing the AR device 501, as explained above. As illustrated in FIG. 9A, a user is seen pointing her finger towards an empty space in a real office environment 900. In this example, the user may have dedicated the empty space in her office (which is an empty desk or table) to a multimedia content of a connected device 216, such as a virtual microwave oven. As illustrated in FIG. 9A, the user in her office environment 900 wears an AR device 501, such as head gears, and makes a pointing gesture with her finger 901 that represents the actuating means of the AR device 501. The pointing gesture is made towards an empty space on her desk. Based on the pointing gesture position as identified from an image of the real office environment 900, a multimedia content of a connected device 216, i.e., a microwave, is identified and displayed at the position of the gesture position. Referring to FIG. 9B, a virtual microwave 903 appears at the same position to which the gesture is pointed to. Once the virtual microwave is displayed at the user's actual location, the user can control the real microwave situated at the user's home by controlling the virtual microwave 903 through hand and/or finger gestures which gives the user a real experience of interacting with the device 216.

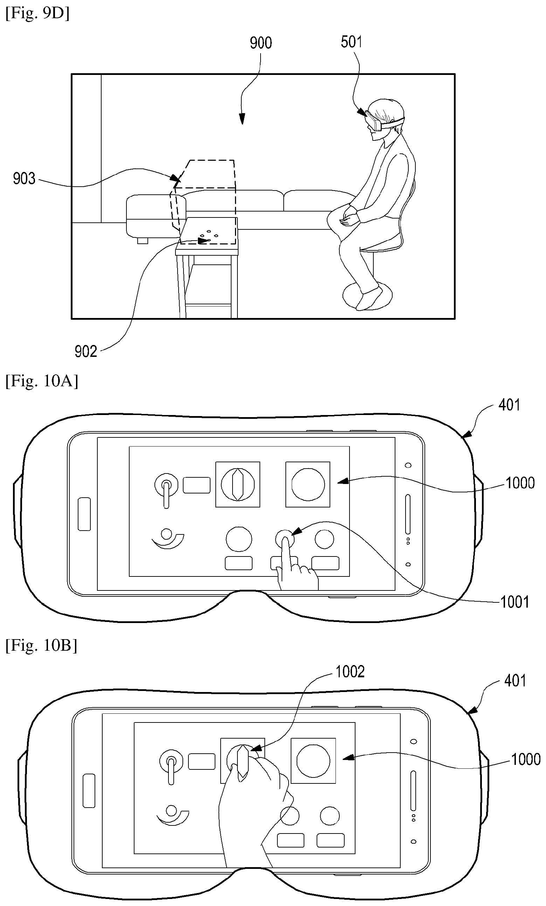

FIGS. 9C and 9D illustrate another example of placing a multimedia content of a connected device 216 at a desired location in an AR, when using or wearing the AR device 501. In this example, the desired location can be seen as a position 902 on a table placed in a real environment 900, which may be a living space of the user, as represented in FIGS. 9C and 9D. For exact placement of the multimedia content at the position 902, the positioning unit (referring to FIG. 5B) may employ various vision based and location based positioning systems disclosed above, for example, indoor positioning system (IPS), image processing techniques, triangulation techniques, use of markers etc. Referring to FIG. 9C, the user wears his AR device 501 (represented as head gears) and makes a vision based gesture in the direction in which the position 902 can be seen or captured on the table near him. Once the parameters of the environment in relation to the gesture are detected, a multimedia content of a connected device 216 is displayed at the same position 902. Referring to FIG. 9D, a multimedia content represented as a virtual microwave 903 appears at the same position 902 towards which the vision gesture is directed.

FIGS. 10A to 10C illustrate an example of an updated multimedia content including a virtual replica 1000 including a plurality of virtual actuators corresponding to a connected device. The updated multimedia content may be displayed on a display of a VR device 401, as explained above. The virtual replica may include buttons and knobs as represented in FIGS. 10A to 10C. FIG. 10A illustrates a pointing gesture performed at virtual button 1001 as displayed within the virtual replica 1000 by a finger of the user of the VR device 401. In this example, the actuating means is the finger, or hand of the user of the VR device 401. Accordingly, the updated multimedia content as illustrated also represents a graphical representation of the finger interacting with the virtual button 1001.

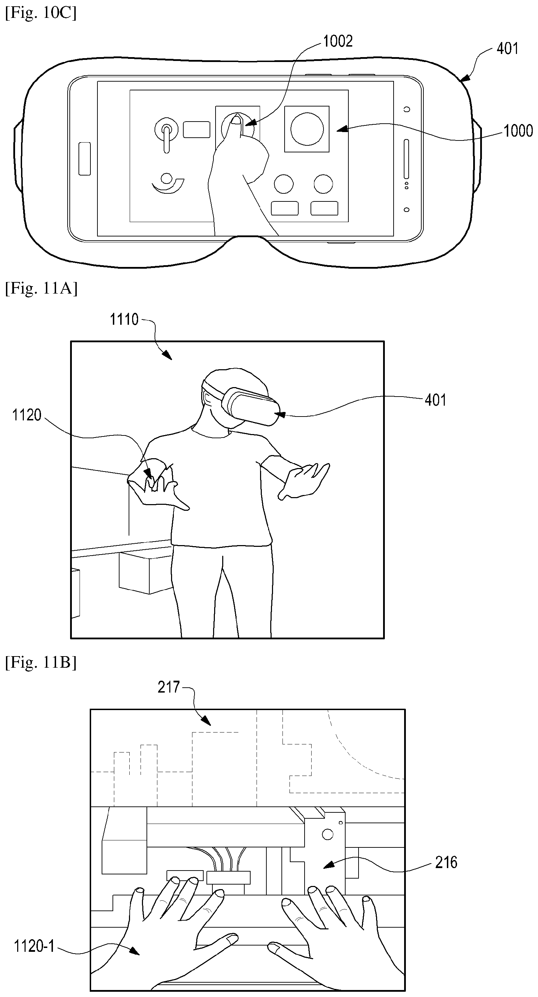

FIGS. 10B and 10C respectively illustrate a rotation gesture performed on a virtual knob (1002 and 1003) as displayed within the virtual replica 1000 by using a thumb and a finger of the user of the VR device 401. Accordingly, the updated multimedia content as illustrated also represents a graphical representation of the thumb and a finger interacting with the virtual knob (1002 and 1003). FIG. 10B illustrates a virtual knob 1002 prior to performing the rotation and FIG. 10C illustrates a knob 1003 after performing the knob rotation. The gesture analyzing unit (referring to FIGS. 4B and 5B) may detect the gestures performed on the virtual replica of the actuator, as illustrated in FIGS. 10A, 10B and 10C, and accordingly analyzed gestures are converted to corresponding control commands and provided to the actual connected device 216. Using the virtual actuators as illustrated in FIGS. 10A, 10B and 10C, heavy machineries and complex systems may be controlled by simple interacting with the virtual actuators of the updated multimedia contents in a VR. One such example is illustrated in FIGS. 11A and 11B.

FIG. 11B illustrates a complex machine as a connected device 216 present in the real world environment 217. The user may be able to operate the complex machine that is shown in FIG. 11B, while sitting at his home. FIG. 11A illustrates a home environment 1110 where the user is seen wearing his VR device 401 performing gestures with his hands 1120. The gestures performed by the user in his home environment 1110 may be translated to control commands to be provided at the complex machine (shown as connected device 216 in environment 217 in FIG. 11B. Further, FIG. 11B also illustrates graphical representation of the actuating means 1120-1 in an operational relationship with the virtual actuators.

Another example illustrated in FIG. 12 represents a user wearing a device (for example a VR device 401) which enables him to view a VR environment 1260 of a factory including machine equipment. The VR 1260 viewable through his respective VR device 401 enables the user to interact with complex machinery from any place.

Another example illustrated in FIG. 13 represents a user wearing an AR device 501 present in his home environment 1330. Further, within the home environment 1330, an AR includes a multimedia content 1350 displayed in an AR viewable through the AR device 501. The user is seen interacting with the multimedia content 1350, which is a virtual machine tool, using eye-gestures 1340 (represented as dotted lines).

FIGS. 14A and 14B illustrate another graphical representation of a display of the VR device 401 displaying an updated multimedia content including a graphical representation of an actuating means 1401 in an operational relationship with a virtual actuator 1400 of the connected device 216. As illustrated in FIG. 14A, the virtual actuator of a connected device 216 is represented as a touch-input panel 1400 which represents a user-interface of software for the connected device 216, where the user-interface is present on a computer system in a real environment 217, as shown in FIG. 14B. Further, the hand gesture may be performed by the user by means of a marker 1401 worn on the user's finger. As seen in FIG. 14A, a gesture command is provided by way of drawing on the virtual input panel 1400. The gesture command as drawn on the virtual input panel 1400 is translated as an output to the real connected device 216, as shown in FIG. 14B.

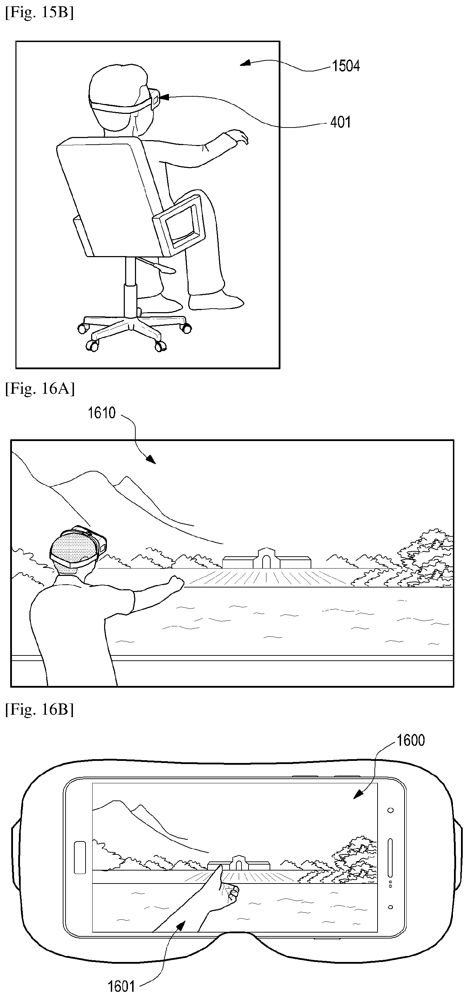

FIGS. 15A and 15B illustrate another example graphical representation of displaying an updated multimedia content on the display of a VR device 401, explained above. As illustrated in FIG. 15A, the VR display (not shown) displays a VR view 1500 including an updated multimedia content that includes a virtual replica 1501 of an actuator of a flight simulator and a graphical representation 1502 of the hand performing gestures on the virtual replica 1501 of the actuator. Further, FIG. 15B illustrates a user present in real world environment 217 wearing a VR device 401 represented as head-gears, who is able to view the VR view 1500 sitting at his home environment 1504. Further, the user may operate the actuator of the flight-simulator by performing gestures through his hands on the virtual replica 1501, as seen on his VR display through his VR device 401.

FIGS. 16A and 16B illustrate a graphical representation of displaying an updated multimedia content on the display of a VR device 401, as explained above, the updated multimedia content including a graphical representation of the actuating means for controlling the connected device. As illustrated in FIG. 16A, a user present in real environment 1610 wearing a VR device (not shown) represented as head-gears, provides gesture commands by way of hand movement towards a smart fountain. Further, as illustrated in FIG. 16B, a VR view 1600, as presented on the VR display (not indicated in FIG. 16B) includes an updated multimedia content that includes a graphical representation 1601 of the hand performing a gesture towards the smart fountain in order to provide control commands to the smart fountain.

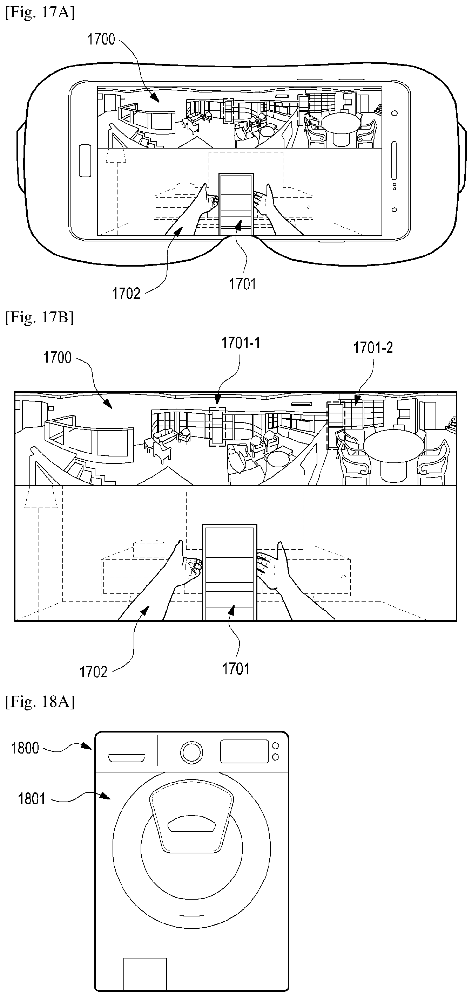

FIGS. 17A and 17B illustrate a graphical representation of a 360 degree VR view 1700 on a VR display (not indicated) of a VR device 1701(for example, the VR device 401). As illustrated in FIG. 17A, a multimedia content 1701 of a connected device is selected within the 360 degree VR view 1700. Further, the VR view 1700 also includes graphical representation of the actuating means 1702 represented as hands of the user in FIG. 17A. Further, FIG. 17B illustrates the 360 degree VR view 1700 including substantially similar virtual replicas **1701-1,** and 1701-2. The user may select a multimedia content (1701-1 or 1701-2) from the VR view 1700 so as to reallocate the multimedia content to any of the connected devices. By way of an example, the multimedia content 1701 as selected by the user belongs to an air conditioning unit. The multimedia content 1701 may also be reallocated to another connected device so as to control that connected device via the multimedia content 1701.

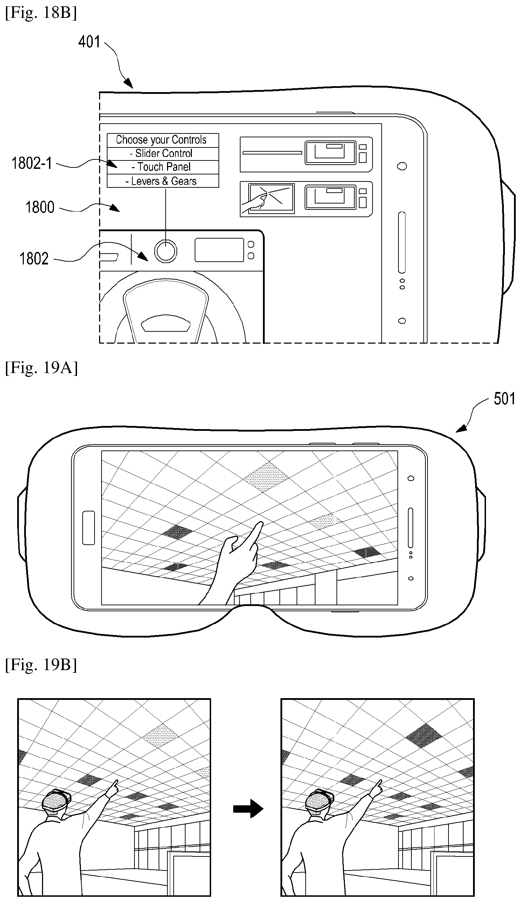

FIGS. 18A and 18B illustrate an example updated multimedia content including an actuator of a connected device. As illustrated in FIG. 18A, a multimedia content 1801 is displayed in a VR view 1800. For understanding sake, the VR display of the VR device 401 is not shown in FIG. 18A, on which the VR view 1800 is displayed. FIG. 18B illustrates a portion of the VR device 401, including an updated multimedia content 1802 including a zoom-in portion of the actuator of the multimedia content 1801. Further, as illustrated in FIG. 18B, a list of available virtual replicas of actuators, indicated by arrow 1802-1, may be displayed along with the updated multimedia content 1802. As such the user may select a virtual replica of an actuator which he desires to interact with, to provide gesture command to the real connected device, irrespective of the actuator actually present on the real connected device.

FIGS. 19A and 19B illustrate controlling smart lights in an AR displayed on the AR device 501, as explained above. As illustrated, the user can operate smart lights in his office using the headset, i.e. AR device 501, by simply looking and making a pointing gesture towards the smart lights on the ceiling.

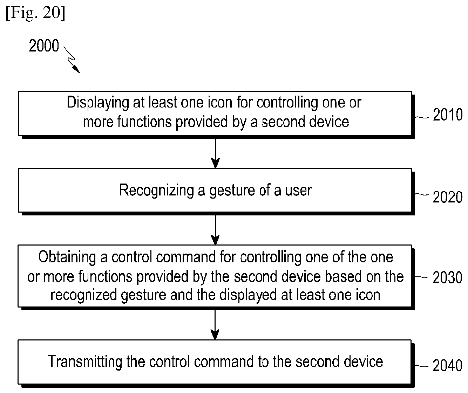

FIG. 20 illustrates an example of performing remote control in a first device supporting at least one of a VR mode and an AR mode, in accordance with an embodiment of the present disclosure.

Referring to FIG. 20, a method 2000 of performing remote control in a first device supporting at least one of a VR mode and an AR mode. In FIG. 20, the first device may form for example, the AR device 501, the whole or part of the electronic device 300 as shown in FIG. 3, electronic device 201 as shown in FIG. 2A.

The method 2000 includes at step 2010, displaying at least one icon for controlling one or more functions provided by a second device. The second device may correspond to the connected device 216 as shown in FIG. 2B. Alternatively, a device selected by the user's gesture among a plurality of connected target devices may be the second device.

The at least one icon is displayed on a screen of the first device. And, status information of the second device, and an indicator for manipulating one of the at least one icon based on a gesture of a user may be further displayed on the screen. The one of the at least one icon is indicated by the indicator based on position information of the indicator on the screen. For example, the one of the at least one icon may be an icon displayed at a location corresponding to position information of the indicator on the screen.

Meanwhile, the manipulation of the one of the at least one icon may include at least one of tap, double tap, long press, clockwise rotation, anticlockwise rotation, swiping and sliding on the one of the at least one icon.

The method 2000 includes recognizing a gesture of a user at step 2020. Further, the method 2000 includes at step 2030, obtaining a control command for controlling one of the one or more functions provided by the second device based on the recognized gesture and the displayed at least one icon. For example, the control command is obtained by generating a control command corresponding to the manipulation of the one of the at least one icon.

The method 2000 includes at step 2040, transmitting the obtained control command to the second device. A connection with the second device is established for transmitting the obtained control command.

## Claims

1. A method for performing remote control in a first device (201, 401) supporting at least one of a virtual reality, VR, mode and an augmented reality, AR, mode, the method comprising:
displaying (2010) a virtual representation of a second device (213, 216) including at least one virtual actuator for controlling one or more functions provided by the second device (213, 216), wherein at least one virtual actuator comprises a virtual touch input panel (1400);
recognizing (2020) a gesture of a user;
obtaining (2030) a control command for controlling one of the one or more functions provided by the second device (213, 216) based on the recognized gesture and the displayed at least one icon; and
transmitting (2040) the obtained control command to the second device (213),
**characterized in that**, the method further comprises:
displaying at least one virtual hand imitating the gesture of the user,
wherein the virtual touch input panel represents the user interface of software for the second device (216) in the real environment and the recognized gesture is provided by way of drawing on the virtual touch panel and the control command as drawn on the virtual touch input panel (1400) is replicated as an output to the second device (216) in the real environment.

2. The method of claim 1, wherein obtaining the control command comprises:
displaying an indicator for manipulating a first virtual actuator of the at least one virtual actuator on a screen displaying the at least one virtual actuator based on the recognized gesture; and
generating the control command corresponding to the manipulation of the first virtual actuator in response to the manipulation of the first virtual actuator based on the recognized gesture.

3. The method of claim 2, wherein position information of the indicator on the screen corresponds to a location of the first virtual actuator.

4. The method of claim 2, wherein the manipulation of the first virtual actuator includes at least one of tap, double tap, long press, clockwise rotation, anticlockwise rotation, swiping and sliding on the first virtual actuator.

5. The method of claim 1, wherein displaying the at least one virtual actuator comprises:
displaying a plurality of target devices; and
identifying one of the plurality of target devices as the second device by a gesture of the user; and
displaying the at least one virtual actuator for controlling the one or more functions provided by the second device.

6. The method of claim 5, wherein transmitting the control command further comprises:
establishing a connection with the identified second device.

7. The method of claim 1, wherein displaying the at least one virtual actuator comprises:
displaying the at least one virtual actuator at location indicated by a gesture of the user.

8. The method of claim 7, wherein the location is identified based on at least one of a global positioning system, GPS, an indoor positioning system, IPS, at least one marker, an image processing technique and a triangulation technique.

9. The method of claim 1, wherein displaying the at least one virtual actuator further comprises:
displaying status information of the second device.

10. The method of claim 1, wherein the at least one virtual actuator is updated based on position information of the first device.

11. A system comprising first device (201, 401) supporting at least one of a virtual reality, VR, mode and an augmented reality, AR, mode, and a second device (213, 216, 216-1, 216-2, ..., 216-N), the first and the second device each comprising:
memory (204) storing instructions; and
a processor (203), wherein the instructions, when executed by the processor (203), cause the first and the second device (201, 401) to perform respective operations according to the method described in one of claims 1 to 10.

## Patentansprüche

1. Verfahren zum Ausführen einer Fernsteuerung in einer ersten Vorrichtung (201, 401), die einen VR(virtuelle Realität)-Modus und/oder einen AR(erweiterte Realität)-Modus unterstützt, wobei das Verfahren Folgendes umfasst:
Anzeigen (2010) einer virtuellen Darstellung einer zweiten Vorrichtung (213, 216), die mindestens einen virtuellen Aktuator zum Steuern einer oder mehrerer von der zweiten Vorrichtung (213, 216) bereitgestellten Funktionen enthält, wobei mindestens ein virtueller Aktuator ein virtuelles Touch-Eingabefeld (1400) umfasst;
Erkennen (2020) einer Geste eines Benutzers;
Erhalten (2030) eines Steuerungsbefehls zum Steuern einer der einen oder mehreren von der zweiten Vorrichtung (213, 216) bereitgestellten Funktionen basierend auf der erkannten Geste und dem angezeigten mindestens einen Icon; und
Übertragen (2040) des erhaltenen Steuerungsbefehls an die zweite Vorrichtung (213),
**gekennzeichnet dadurch, dass** das Verfahren ferner Folgendes umfasst:
Anzeigen mindestens einer virtuellen Hand, die die Geste des Benutzers imitiert,
wobei das virtuelle Touch-Eingabefeld die Benutzerschnittstelle der Software für die zweite Vorrichtung (216) in der realen Umwelt darstellt und die erkannte Geste durch Zeichnen auf dem virtuellen Touchscreen bereitgestellt wird und der auf dem virtuellen Touch-Eingabefeld (1400) gezeichnete Steuerungsbefehl als Ausgabe an die zweite Vorrichtung (216) in der realen Umwelt repliziert wird.

2. Verfahren nach Anspruch 1, wobei das Erhalten des Steuerungsbefehls Folgendes umfasst:
Anzeigen eines Indikators zum Manipulieren eines ersten virtuellen Aktuators des mindestens einen virtuellen Aktuators auf einem Bildschirm, der den mindestens einen virtuellen Aktuator anzeigt, basierend auf der erkannten Geste; und
Erzeugen des Steuerungsbefehls, der der Manipulation des ersten virtuellen Aktuators entspricht, als Reaktion auf die Manipulation des ersten virtuellen Aktuators basierend auf der erkannten Geste.

3. Verfahren nach Anspruch 2, wobei Positionsinformationen des Indikators auf dem Bildschirm einem Standort des ersten virtuellen Aktuators entsprechen.

4. Verfahren nach Anspruch 2, wobei die Manipulation des ersten virtuellen Aktuators Tippen, Doppeltippen, langes Drücken, Drehen im Uhrzeigersinn, Drehen gegen den Uhrzeigersinn, Wischen und/oder Gleiten auf dem ersten virtuellen Aktuator enthält.

5. Verfahren nach Anspruch 1, wobei das Anzeigen des mindestens einen virtuellen Aktuators Folgendes umfasst:
Anzeigen einer Vielzahl von Zielvorrichtungen; und
Identifizieren einer der Vielzahl von Zielvorrichtungen als zweite Vorrichtung durch eine Geste des Benutzers; und
Anzeigen des mindestens einen virtuellen Aktuators zum Steuern der einen oder mehreren Funktionen, die von der zweiten Vorrichtung bereitgestellt werden.

6. Verfahren nach Anspruch 5, wobei das Übertragen des Steuerungsbefehls ferner Folgendes umfasst:
Herstellen einer Verbindung mit der identifizierten zweiten Vorrichtung.

7. Verfahren nach Anspruch 1, wobei das Anzeigen des mindestens einen virtuellen Aktuators Folgendes umfasst:
Anzeigen des mindestens einen virtuellen Aktuators an dem durch eine Geste des Benutzers angezeigten Standort.

8. Verfahren nach Anspruch 7, wobei der Standort basierend auf einem globalen Positionierungssystem, GPS, einem Indoor-Positionierungssystem, IPS, mindestens einer Markierung, einer Bildverarbeitungstechnik und/oder einer Triangulationstechnik identifiziert wird.

9. Verfahren nach Anspruch 1, wobei das Anzeigen des mindestens einen virtuellen Aktuators ferner Folgendes umfasst:
Anzeigen von Statusinformationen der zweiten Vorrichtung.

10. Verfahren nach Anspruch 1, wobei der mindestens eine virtuelle Aktuator basierend auf Positionsinformationen der ersten Vorrichtung aktualisiert wird.

11. System, das eine erste Vorrichtung (201, 401), die einen VR(virtuelle Realität)-Modus und/oder einen AR(erweiterte Realität)-Modus unterstützt, und eine zweite Vorrichtung (213, 216, 216-1, 216-2, ..., 216-N) umfasst, wobei die erste und die zweite Vorrichtung jeweils Folgendes umfassen:
einen Speicher (204), der Anweisungen speichert; und
einen Prozessor (203), wobei die Anweisungen, wenn sie von dem Prozessor (203) ausgeführt werden, die erste und die zweite Vorrichtung (201, 401) veranlassen, entsprechende Operationen nach dem in einem der Ansprüche 1 bis 10 beschriebenen Verfahren auszuführen.

## Revendications

1. Procédé pour effectuer une commande à distance dans un premier dispositif (201, 401) prenant en charge au moins l'un parmi un mode de réalité virtuelle, VR, et un mode de réalité augmentée, AR, le procédé comprenant :
afficher (2010) une représentation virtuelle d'un deuxième dispositif (213, 216) incluant au moins un actionneur virtuel pour contrôler une ou plusieurs fonctions fournies par le deuxième dispositif (213, 216), où au moins un actionneur virtuel comprend un panneau d'entrée tactile virtuel (1400) ;
reconnaître (2020) un geste d'un utilisateur ;
obtenir (2030) une commande de contrôle pour contrôler l'une parmi une ou plusieurs fonctions fournies par le deuxième dispositif (213, 216) sur la base du geste reconnu et de l'au moins une icône affichée ; et
transmettre (2040) la commande de contrôle obtenue au deuxième dispositif (213),
**caractérisé en ce que** le procédé comprend en outre :
afficher au moins une main virtuelle imitant le geste de l'utilisateur,
où le panneau d'entrée tactile virtuel représente l'interface utilisateur du logiciel pour le deuxième dispositif (216) dans l'environnement réel et le geste reconnu est fourni par le biais d'un dessin sur le panneau tactile virtuel et la commande de contrôle telle que dessinée sur le panneau d'entrée tactile virtuel (1400) est reproduite en tant que sortie vers le deuxième dispositif (216) dans l'environnement réel.

2. Procédé selon la revendication 1, où l'obtention de la commande de contrôle comprend:
afficher un indicateur afin de manipuler un premier actionneur virtuel de l'au moins un actionneur virtuel sur un écran affichant l'au moins un actionneur virtuel sur la base du geste reconnu ; et
générer la commande de contrôle correspondant à la manipulation du premier actionneur virtuel en réponse à la manipulation du premier actionneur virtuel sur la base du geste reconnu.

3. Procédé selon la revendication 2, où des informations de position de l'indicateur sur l'écran correspondent à un emplacement du premier actionneur virtuel.

4. Procédé selon la revendication 2, où la manipulation du premier actionneur virtuel inclut au moins l'un parmi un tapotement, un double tapotement, une pression longue, une rotation dans le sens des aiguilles d'une montre, une rotation dans le sens inverse des aiguilles d'une montre, un balayage et un glissement sur le premier actionneur virtuel.

5. Procédé selon la revendication 1, où l'affichage de l'au moins un actionneur virtuel comprend :
afficher une pluralité de dispositifs cibles ; et
identifier l'un de la pluralité de dispositifs cibles comme étant le deuxième dispositif par un geste de l'utilisateur ; et
afficher l'au moins un actionneur virtuel pour commander l'une ou plusieurs fonctions fournies par le deuxième dispositif.

6. Procédé selon la revendication 5, où la transmission de la commande de contrôle comprend en outre :
établir une connexion avec le deuxième dispositif identifié.

7. Procédé selon la revendication 1, où l'affichage de l'au moins un actionneur virtuel comprend :
afficher l'au moins un actionneur virtuel à l'emplacement indiqué par un geste de l'utilisateur.

8. Procédé selon la revendication 7, où l'emplacement est identifié sur la base d'au moins l'un parmi un système de positionnement global, GPS, un système de positionnement intérieur, IPS, au moins un marqueur, une technique de traitement d'images et une technique de triangulation.

9. Procédé selon la revendication 1, où l'affichage de l'au moins un actionneur virtuel comprend en outre :
afficher des informations d'état du deuxième dispositif.

10. Procédé selon la revendication 1, où l'au moins un actionneur virtuel est mis à jour sur la base d'informations de position du premier dispositif.

11. Système comprenant un premier dispositif (201, 401) prenant en charge au moins l'un parmi un mode de réalité virtuelle, VR, et un mode de réalité augmentée, AR, et un deuxième dispositif (213, 216, 216-1, 216-2, ..., 216-N), le premier et le deuxième dispositif comprenant chacun :
une mémoire (204) stockant des instructions ; et
un processeur (203), où les instructions, lorsqu'elles sont exécutées par le processeur (203), amènent le premier et le deuxième dispositif (201, 401) à effectuer des opérations respectives selon le procédé décrit dans l'une des revendications 1 à 10.
